(19) Europäisches Patentamt
European Patent Office
Office européen des brevets

(11) EP 4 783 508 A1

(12) **EUROPEAN PATENT APPLICATION**
published in accordance with Art. 153(4) EPC

(43) Date of publication:
29.07.2026 Bulletin 2026/31

(21) Application number: 24870415.7

(22) Date of filing: 06.09.2024

(51) International Patent Classification (IPC):
*H04L 5/00* (2006.01) *H04W 72/12* (2023.01)

(52) Cooperative Patent Classification (CPC):
H04L 5/00; H04W 72/12; H04W 72/1268

(86) International application number:
PCT/CN2024/117513

(87) International publication number:
WO 2025/066869 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311286257

(71) Applicant: HUAWEI TECHNOLOGIES CO., LTD.
Shenzhen 518129 (CN)

(72) Inventors:
• LI, Xi
  Shenzhen, Guangdong 518129 (CN)
• GAO, Xiang
  Shenzhen, Guangdong 518129 (CN)
• ZHANG, Zhening
  Shenzhen, Guangdong 518129 (CN)
• LIU, Kunpeng
  Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION METHOD AND APPARATUS**

(57) This application relates to the field of communication technologies, and provides a communication method and apparatus. The method includes: A terminal device receives indication information, where the indication information indicates that SRS sending on a first symbol in an SRS resource is dropped; and the terminal device sends the SRS on at least one second symbol, where the at least one second symbol is a symbol in at least one consecutive symbol that is in the SRS resource and that corresponds to a first time period, the first time period is a time period between a first moment and a second moment, the first moment is a moment at which the indication information is parsed by the terminal device, the second moment is a moment corresponding to a start location of the first symbol, and an antenna port that is for sending the SRS and that corresponds to the at least one second symbol includes all antenna ports of the terminal device. According to the communication method provided in embodiments of this application, a symbol that is in an SRS resource and that is for sending an SRS can be selected based on a timing relationship, improving accuracy of uplink channel acquisition and ensuring uplink transmission performance.

400

Network device → Terminal device

S410: Indication information, indicating that SRS sending on a first symbol in an SRS resource is dropped

S420: Send the SRS to the network device on at least one second symbol, where the at least one second symbol is a symbol in at least one consecutive symbol that is in the SRS resource and that corresponds to a first time period

FIG. 4

## Description

This application claims priority to Chinese Patent Application No. 202311286257.3, filed with the China National Intellectual Property Administration on September 28, 2023 and entitled "COMMUNICATION METHOD AND APPARATUS", which is incorporated herein by reference in its entirety.

## TECHNICAL FIELD

Embodiments of this application relate to the field of communication technologies, and more specifically, to a communication method and apparatus.

## BACKGROUND

Currently, a network device performs channel measurement based on a received sounding reference signal (sounding reference signal, SRS), and obtains uplink channel information of a terminal device, to perform data scheduling for the terminal device based on the uplink channel information. The terminal device transmits a physical uplink shared channel (physical uplink shared channel, PUSCH) based on the scheduling of the network device. When SRS transmission on a most adjacent SRS resource conflicts with another transmission, for example, the physical uplink control channel (physical uplink control channel, PUCCH), and consequently all or a part of SRS transmission on the SRS resource is dropped, the network device performs channel measurement based on an SRS received on an earlier SRS resource, and performs PUSCH scheduling based on a measurement result.

However, PUSCH scheduling based on the measurement result of the SRS on the earlier SRS resource affects accuracy of uplink channel acquisition and uplink transmission performance. In addition, because there is a timing relationship between SRS sending and information from the network device indicating to the terminal device that all or a part of SRS transmission on the SRS resource is dropped, dropping all or a part of SRS transmission by the terminal device upon indication may take place in an SRS sending process. Consequently, accuracy of uplink channel acquisition and uplink transmission performance are further affected.

## SUMMARY

Embodiments of this application provide a communication method and apparatus, so that a symbol that is in an SRS resource and that is for sending an SRS can be selected based on a timing relationship between an SRS and indication information indicating SRS transmission dropping, improving accuracy of uplink channel acquisition and ensuring uplink transmission performance.

According to a first aspect, a communication method is provided. The method may be performed by a terminal device, or may be performed by a module (for example, a chip or a circuit) in the terminal device, or may be performed by a logical node, a logical module, or software that can implement all or a part of functions of the terminal device. This is not limited in this application.

The method includes: A terminal device receives indication information, where the indication information indicates that SRS sending on a first symbol in an SRS resource is dropped; and the terminal device sends the SRS on at least one second symbol, where the at least one second symbol is a symbol in at least one consecutive symbol that is in the SRS resource and that corresponds to a first time period, the first time period is a time period between a first moment and a second moment, the first moment is a moment at which the indication information is parsed by the terminal device, the second moment is a moment corresponding to a start location of the first symbol, and an antenna port that is for sending the SRS and that corresponds to the at least one second symbol includes all antenna ports of the terminal device.

Specifically, a reason why SRS sending on the first symbol is dropped may be that sending the SRS by the terminal device on the first symbol conflicts with or overlaps (overlap) sending a first transmission object by the terminal device on the first symbol. Alternatively, a reason why SRS sending on the first symbol is dropped may be that a priority of sending the SRS by the terminal device on the at least one symbol is lower than a priority of sending a first transmission object by the terminal device on the at least one symbol. Alternatively, a reason why SRS sending on the first symbol is dropped may be that transmission performed by the terminal device on the first symbol is configured to be zero power, or the like. Dropping on the first symbol may be for another reason. This is not limited in this application.

For example, the first transmission object may be a physical uplink control channel (physical uplink control channel, PUCCH), a physical uplink shared channel (physical uplink control channel, PUSCH), a physical random access channel (physical random access channel, PRACH), or the like used to carry a hybrid automatic repeat request acknowledgment (hybrid automatic repeat request affirmative acknowledgment, HARQ-ACK), a positive scheduling request (positive scheduling request, positive SR), a rank indicator (rank indicator, RI), a channel state information reference signal resource indicator (channel state information reference signal resource indicator, CRI), or an SSB resource indicator (SS/PBCH block resource indicator, SSBRI).

Alternatively, the terminal device periodically (periodic) or semi-persistently (semi-persistent) sends the SRS. A reason why SRS sending on the first symbol is dropped may be that periodically (periodic) or semi-persistently (semi-persistent) sending the SRS by the terminal device on the first symbol conflicts with or overlaps (overlap) sending a second transmission object by the terminal device on the first symbol. Alternatively, a reason why SRS sending on the first symbol is dropped may be that a priority of periodically (periodic) or semi-persistently (semi-persistent) sending the SRS by the terminal device on the at least one symbol is lower than a priority of sending a second transmission object by the terminal device on the at least one symbol. Alternatively, a reason why SRS sending on the first symbol is dropped may be that transmission performed by the terminal device on the first symbol is configured to be zero power, or the like. Dropping on the first symbol may be for another reason. This is not limited in this application.

For example, the second transmission object may be a PUSCH used to carry aperiodic (aperiodic) CSI.

Alternatively, the terminal device periodically (periodic) sends the SRS. A reason why SRS sending on the first symbol is dropped may be that periodically (periodic) sending the SRS by the terminal device on the first symbol conflicts with or overlaps (overlap) sending a third transmission object by the terminal device on the first symbol. Alternatively, a reason why SRS sending on the first symbol is dropped may be that a priority of periodically (periodic) sending the SRS by the terminal device on the at least one symbol is lower than a priority of sending a third transmission object by the terminal device on the at least one symbol. Alternatively, a reason why SRS sending on the first symbol is dropped may be that transmission performed by the terminal device on the first symbol is configured to be zero power, or the like. Dropping on the first symbol may be for another reason. This is not limited in this application.

For example, the third transmission object may be a PUSCH used to carry semi-persistent (semi-persistent) CSI.

It should be noted that, for the first transmission object, the second transmission object, and the third transmission object involved in the following, reference may be made to the foregoing related descriptions of the first transmission object, the second transmission object, and the third transmission object. Details are not described in the following again.

Specifically, the SRS resource may include one slot (slot), or may be any time-frequency resource configured by a network device. This is not limited in this application.

Specifically, "all antenna ports of the terminal device" in this application may be all antenna ports used by the terminal device for sending the SRS, and all the antenna ports used by the terminal device for sending the SRS may be configured by the network device. Similar explanations may be provided for "all antenna ports of the terminal device" in the following. Details are not described in the following again.

It should be understood that the foregoing technical solution is applicable to a scenario in which phase continuity between two segments of symbols before and after an intermediate symbol in an SRS resource cannot be ensured due to transmission interruption on the intermediate symbol. The foregoing technical solution can also be applied to another scenario, for example, a scenario in which phase continuity between two segments of symbols before and after an intermediate symbol in an SRS resource can be ensured with transmission interruption on the intermediate symbol. This is not specifically limited in this application.

According to the technical solution provided in this application, the terminal device can select, based on a timing relationship between an SRS and indication information indicating SRS transmission dropping, the at least one second symbol that is in the SRS resource and that can be used for sending the SRS, so that the network device can measure an uplink channel based on the SRS sent by the terminal device on the at least one second symbol, improving accuracy of uplink channel acquisition and ensuring uplink transmission performance.

With reference to the first aspect, in some implementations of the first aspect, the SRS is sent on the at least one second symbol over all the antenna ports of the terminal device a same quantity of times.

Alternatively, the at least one second symbol corresponds to each antenna port a same quantity of times.

It should be understood that "a quantity of times the at least one second symbol corresponds to an antenna port" is a quantity of symbols that are in the at least one second symbol and that correspond to the antenna port. Therefore, the foregoing "the at least one second symbol corresponds to each antenna port a same quantity of times" means that each antenna port corresponds to a same quantity of symbols in the at least one second symbol. For a quantity of times a symbol corresponds to an antenna port in the following, refer to related descriptions of "a quantity of times the at least one second symbol corresponds to an antenna port". Details are not described in the following again.

According to the foregoing technical solution, the SRS is sent on the at least one second symbol over each of all the antenna ports of the terminal device a same quantity of times, so that uplink channel measurement is performed on each antenna port a same quantity of times, ensuring accuracy of uplink channel measurement corresponding to each antenna port of the terminal device, and ensuring uplink transmission performance.

With reference to the first aspect, in some implementations of the first aspect, the at least one consecutive symbol that is in the SRS resource and that corresponds to the first time period includes at least one symbol set, each of the at least one symbol set includes one symbol or multiple consecutive symbols, and the at least one second symbol is a symbol set having a largest quantity of symbols in the at least one symbol set.

It should be understood that the at least one consecutive symbol that is in the SRS resource and that corresponds to the first time period may be considered as a first symbol set, and each symbol is an element in the symbol set. The at least one symbol set may be a subset of the first symbol set including the first symbol set. In other words, there is at least one pattern for randomly selecting one element or multiple consecutive elements from the first symbol set, and a result of each pattern corresponds to the at least one symbol set.

According to the foregoing technical solution, a quantity of the at least one second symbol for sending the SRS is as large as possible, so that the terminal device maintains an advantage of SRS repetition as much as possible, improving a signal-to-noise ratio of receiving the SRS by the network device, improving accuracy of uplink channel measurement, and ensuring uplink transmission performance.

With reference to the first aspect, in some implementations of the first aspect, the at least one consecutive symbol that is in the SRS resource and that corresponds to the first time period includes at least one symbol set, each of the at least one symbol set includes one symbol or multiple consecutive symbols, and the at least one second symbol is a symbol set having a latest end moment in the at least one symbol set.

According to the foregoing technical solution, time of the at least one second symbol for sending the SRS is as close as possible to time of performing uplink scheduling by the network device, so that the network device performs uplink channel measurement based on a latest SRS of the terminal device as much as possible, improving accuracy of uplink channel measurement and ensuring uplink transmission performance.

With reference to the first aspect, in some implementations of the first aspect, the method further includes: dropping sending the SRS on a third symbol, where the third symbol is all symbols that are in the SRS resource other than the first symbol and the at least one second symbol and that correspond to a second time period, and the second time period is a time period between the first moment and an end moment of the SRS resource.

It should be understood that the method provided in the first aspect may be repeatedly performed on a same SRS resource. In other words, for multiple pieces of indication information received at different times, the method provided in the first aspect may be sequentially performed based on a receiving time sequence. If the at least one second symbol that meets the foregoing condition does not exist in the at least one consecutive symbol corresponding to a first time period corresponding to one piece of indication information, the terminal device may actively drop SRS sending on the at least one consecutive symbol corresponding to the first time period corresponding to the indication information. If the at least one second symbol that meets the foregoing condition exists in the at least one consecutive symbol corresponding to a first time period corresponding to one piece of indication information, in some possible implementations, the terminal device actively drops SRS transmission on a symbol other than the at least one second symbol in the at least one consecutive symbol corresponding to the first time period corresponding to the indication information. In some other possible implementations, the terminal device actively drops SRS transmission on a symbol other than the first symbol and the at least one second symbol in at least one consecutive symbol corresponding to a second time period corresponding to the indication information. In the other possible implementations, it means that SRS transmission on all remaining symbols in the SRS resource after the first time period corresponding to the indication information is actively dropped. In other words, for other indication information that corresponds to the SRS resource and that is received after the indication information, the terminal device may no longer repeat the method provided in the first aspect.

According to the foregoing technical solution, resources used for SRS transmission can be saved, and a waste of SRS resources caused by transmission of an invalid SRS can be avoided.

According to a second aspect, a communication method is provided. The method may be performed by a terminal device, or may be performed by a module (for example, a chip or a circuit) in the terminal device, or may be performed by a logical node, a logical module, or software that can implement all or a part of functions of the terminal device. This is not limited in this application.

The method includes: A terminal device receives multiple pieces of indication information, where the multiple pieces of indication information indicate that SRS sending on multiple symbols in an SRS resource is dropped; and the terminal device sends the SRS on at least one fourth symbol and at least one fifth symbol, where the at least one fourth symbol is a symbol in at least one consecutive symbol that is in the SRS resource and that corresponds to a third time period, the third time period is a time period between a third moment and a fourth moment, the third moment is a moment at which first indication information is parsed by the terminal device, the fourth moment is a moment corresponding to a start location of a sixth symbol, the first indication information is latest received indication information in the multiple pieces of indication information, the sixth symbol is a symbol on which SRS sending is dropped as indicated by the first indication information, the at least one fifth symbol is all symbols that are in the SRS resource other than at least one seventh symbol and that correspond to a fourth time period, the fourth time period is a time period between a start moment of the SRS resource and the third moment, and the at least one seventh symbol is a symbol on which SRS sending is dropped as indicated by at least one piece of second indication information, the at least one piece of second indication information is all indication information in the multiple pieces of indication information other than the first indication information, and antenna ports that are for sending the SRS and that correspond to the at least one fourth symbol and the at least one fifth symbol include all antenna ports of the terminal device.

Specifically, a reason why SRS sending on the sixth symbol and/or the at least one seventh symbol is dropped may be that sending the SRS by the terminal device on the sixth symbol and/or the at least one seventh symbol conflicts with or overlaps (overlap) sending a first transmission object by the terminal device on the sixth symbol and/or the at least one seventh symbol. Alternatively, a reason why SRS sending on the sixth symbol and/or the at least one seventh symbol is dropped may be that a priority of sending the SRS by the terminal device on the at least one symbol is lower than a priority of sending a first transmission object by the terminal device on the at least one symbol. Alternatively, a reason why SRS sending on the sixth symbol and/or the at least one seventh symbol is dropped may be that transmission performed by the terminal device on the sixth symbol and/or the at least one seventh symbol is configured to be zero power, or the like. Dropping on the sixth symbol and/or the at least one seventh symbol may be for another reason. This is not limited in this application.

Alternatively, the terminal device periodically (periodic) or semi-persistently (semi-persistent) sends the SRS. A reason why SRS sending on the sixth symbol and/or the at least one seventh symbol is dropped may be that periodically (periodic) or semi-persistently (semi-persistent) sending the SRS by the terminal device on the sixth symbol and/or the at least one seventh symbol conflicts with or overlaps (overlap) sending a second transmission object by the terminal device on the sixth symbol and/or the at least one seventh symbol. Alternatively, a reason why SRS sending on the sixth symbol and/or the at least one seventh symbol is dropped may be that a priority of periodically (periodic) or semi-persistently (semi-persistent) sending the SRS by the terminal device on the at least one symbol is lower than a priority of sending a second transmission object by the terminal device on the at least one symbol. Alternatively, a reason why SRS sending on the sixth symbol and/or the at least one seventh symbol is dropped may be that transmission performed by the terminal device on the sixth symbol and/or the at least one seventh symbol is configured to be zero power, or the like. Dropping on the sixth symbol and/or the at least one seventh symbol may be for another reason. This is not limited in this application.

Alternatively, the terminal device periodically (periodic) sends the SRS. A reason why SRS sending on the sixth symbol and/or the at least one seventh symbol is dropped may be that periodically (periodic) sending the SRS by the terminal device on the sixth symbol and/or the at least one seventh symbol conflicts with or overlaps (overlap) sending a third transmission object by the terminal device on the sixth symbol and/or the at least one seventh symbol. Alternatively, a reason why SRS sending on the sixth symbol and/or the at least one seventh symbol is dropped may be that a priority of periodically (periodic) sending the SRS by the terminal device on the at least one symbol is lower than a priority of sending a third transmission object by the terminal device on the at least one symbol. Alternatively, a reason why SRS sending on the sixth symbol and/or the at least one seventh symbol is dropped may be that transmission performed by the terminal device on the sixth symbol and/or the at least one seventh symbol is configured to be zero power, or the like. Dropping on the sixth symbol and/or the at least one seventh symbol may be for another reason. This is not limited in this application.

Specifically, the SRS resource may include one slot (slot), or may be any time-frequency resource configured by a network device. This is not limited in this application.

It should be understood that, that antenna ports that are for sending the SRS and that correspond to the at least one fourth symbol and the at least one fifth symbol include all antenna ports of the terminal device means that an antenna port that is for sending the SRS and that corresponds to the at least one fourth symbol and an antenna port that is for sending the SRS and that corresponds to the at least one fifth symbol jointly include all the antenna ports of the terminal device. In other words, the antenna port that is for sending the SRS and that corresponds to the at least one fourth symbol may include all or a part of antenna ports of the terminal device, and the antenna port that is for sending the SRS and that corresponds to the at least one fifth symbol may also include all or a part of antenna ports of the terminal device.

It should be understood that the foregoing technical solution is applicable to a scenario in which phase continuity between two segments of symbols before and after an intermediate symbol in an SRS resource can be ensured with transmission interruption on the intermediate symbol.

According to the technical solution provided in this application, when transmission interruption on an intermediate symbol does not affect phase continuity, the terminal device can reserve as many as possible the at least one fifth symbol on the SRS resource before the moment at which the latest received first indication information is parsed, and determine the at least one fourth symbol from the resource corresponding to the third time period corresponding to the first indication information, so that the network device can measure an uplink channel based on the SRS sent by the terminal device on the at least one fourth symbol and the at least one fifth symbol, increasing a quantity of SRSs that can be used for uplink channel measurement, improving accuracy of uplink channel acquisition, and ensuring uplink transmission performance.

With reference to the second aspect, in some implementations of the second aspect, a quantity of times the SRS is sent on the at least one fourth symbol is the same as a quantity of times the SRS is sent on the at least one fifth symbol over all the antenna ports of the terminal device.

Alternatively, a quantity of times the at least one fourth symbol corresponds to each antenna port is the same as a quantity of times the at least one fifth symbol corresponds to each antenna port.

It should be understood that, that a quantity of times the SRS is sent on the at least one fourth symbol is the same as a quantity of time the SRS is sent on the at least one fifth symbol over all the antenna ports of the terminal device means that a sum of quantities of times the SRS is sent on the at least one fourth symbol is the same as a sum of quantities of times the SRS is sent on the at least one fifth symbol over each of all the antenna ports of terminal device. In other words, a sum of quantities of times the at least one fourth symbol corresponds to each antenna port is the same as a sum of quantities of times the at least one fifth symbol corresponds to each antenna port.

According to the foregoing technical solution, uplink channel measurement is performed on each antenna port a same quantity of times, ensuring accuracy of uplink channel measurement corresponding to each antenna port of the terminal device, and ensuring uplink transmission performance.

With reference to the second aspect, in some implementations of the second aspect, the at least one consecutive symbol that is in the SRS resource and that corresponds to the third time period includes at least one symbol set, each of the at least one symbol set includes one symbol or multiple symbols, and the at least one fourth symbol is a symbol set having a largest quantity of symbols in the at least one symbol set.

It should be understood that the at least one consecutive symbol that is in the SRS resource and that corresponds to the third time period may be considered as a second symbol set, and each symbol is an element in the symbol set. The at least one symbol set may be a subset of the second symbol set including the second symbol set. In other words, there is at least one pattern for randomly selecting one element or multiple elements from the second symbol set, and a result of each pattern corresponds to the at least one symbol set.

According to the foregoing technical solution, a quantity of the at least one fourth symbol for sending the SRS is as large as possible, so that the terminal device maintains an advantage of SRS repetition as much as possible, improving a signal-to-noise ratio of receiving the SRS by the network device, improving accuracy of uplink channel measurement, and ensuring uplink transmission performance.

With reference to the second aspect, in some implementations of the second aspect, the at least one fourth symbol includes S types of symbols, each type of symbol of the S types of symbols corresponds to a different antenna port for sending the SRS, S is a positive integer, an end moment of each type of symbol of the at least one fourth symbol is later than an end moment of a same type of symbol in at least one eighth symbol, the same type of symbols correspond to a same antenna port for sending the SRS, and the at least one eighth symbol is all symbols in the at least one consecutive symbol that is in the SRS resource other than the at least one fourth symbol and that corresponds to the third time period.

According to the foregoing technical solution, time of the at least one fourth symbol for sending the SRS is as close as possible to time of performing uplink scheduling by the network device, so that the network device performs uplink channel measurement based on a latest SRS of the terminal device as much as possible, improving accuracy of uplink channel measurement and ensuring uplink transmission performance.

According to a third aspect, a communication method is provided. The method may be performed by a network device, or may be performed by a module (for example, a chip or a circuit) in the network device, or may be performed by a logical node, a logical module, or software that can implement all or a part of functions of the network device. This is not limited in this application.

The method includes: A network device receives an SRS on at least one ninth symbol in an SRS resource, where the SRS resource includes at least one tenth symbol, and the at least one tenth symbol is a symbol in the at least one ninth symbol; and the network device associates uplink scheduling with the SRS resource, where an antenna port corresponding to the at least one tenth symbol includes all antenna ports of a terminal device, or an antenna port corresponding to the at least one tenth symbol includes all antenna ports related to the uplink scheduling.

Specifically, the network device receives, on the SRS resource, the SRS sent by the terminal device, where the at least one ninth symbol is a symbol on which SRS sending is not dropped by the terminal device in the SRS resource. SRS sending on a symbol in the SRS resource other than the at least one ninth symbol may be dropped (dropping) by the terminal device upon indication, or may be actively canceled (cancel) by the terminal device.

For example, a symbol on which SRS sending is dropped by the terminal device upon indication may be a symbol indicated in indication information received by the terminal device, for example, the first symbol in the first aspect, or the sixth symbol and/or the at least one seventh symbol in the second aspect. Specifically, a reason why SRS sending on the symbol is dropped upon indication may be that sending the SRS by the terminal device on the symbol conflicts with or overlaps (overlap) sending a first transmission object by the terminal device on the symbol. Alternatively, a reason why SRS sending on the symbol is dropped upon indication may be that a priority of sending the SRS by the terminal device on the at least one symbol is lower than a priority of sending a first transmission object by the terminal device on the symbol. Alternatively, a reason why SRS sending on the symbol is dropped upon indication may be that transmission performed by the terminal device on the symbol is configured to be zero power, or the like. Dropping on the symbol upon indication may be for another reason. This is not limited in this application.

Alternatively, the terminal device periodically (periodic) or semi-persistently (semi-persistent) sends the SRS. A reason why SRS sending on the symbol is dropped upon indication may be that periodically (periodic) or semi-persistently (semi-persistent) sending the SRS by the terminal device on the symbol conflicts with or overlaps (overlap) sending a second transmission object by the terminal device on the symbol. Alternatively, a reason why SRS sending on the symbol is dropped upon indication may be that a priority of periodically (periodic) or semi-persistently (semi-persistent) sending the SRS by the terminal device on the at least one symbol is lower than a priority of sending a second transmission object by the terminal device on the symbol. Alternatively, a reason why SRS sending on the symbol is dropped upon indication may be that transmission performed by the terminal device on the symbol is configured to be zero power, or the like. Dropping on the symbol upon indication may be for another reason. This is not limited in this application.

Alternatively, the terminal device periodically (periodic) sends the SRS. A reason why SRS sending on the symbol is dropped upon indication may be that periodically (periodic) sending the SRS by the terminal device on the symbol conflicts with or overlaps (overlap) sending a third transmission object by the terminal device on the symbol. Alternatively, a reason why SRS sending on the symbol is dropped upon indication may be that a priority of periodically (periodic) sending the SRS by the terminal device on the at least one symbol is lower than a priority of sending a third transmission object by the terminal device on the symbol. Alternatively, a reason why SRS sending on the symbol is dropped upon indication may be that transmission performed by the terminal device on the symbol is configured to be zero power, or the like. Dropping on the symbol upon indication may be for another reason. This is not limited in this application.

For example, that the terminal device actively drops SRS sending on a symbol may be that when SRS sending on a part of symbols in the SRS resource is dropped upon indication, and when SRSs sent on remaining symbols in the SRS resource are wasted due to reasons such as affected phase continuity and/or inconsistency between quantities of antenna ports corresponding to symbols, the terminal device actively drops SRS sending on all or a part of symbols in the remaining symbols, for example, a symbol in the SRS resource other than the first symbol and the at least one second symbol in the first aspect, or a symbol that is in the SRS resource other than the at least one fourth symbol and that corresponds to the third time period in the second aspect.

Specifically, the SRS resource may include one slot (slot), or may be any time-frequency resource configured by a network device. This is not limited in this application.

It should be understood that the uplink scheduling is scheduling performed by the network device on physical uplink shared channel (physical uplink control channel, PUSCH) transmission of the terminal device. Specifically, the network device performs channel measurement based on the received SRS, obtains uplink (uplink, UL) channel information of the terminal device, and schedules PUSCH transmission of the terminal device based on the UL channel information. Therefore, that the network device associates the uplink scheduling with the SRS resource means that the network device performs channel measurement based on the SRS received on the SRS resource.

Specifically, when an SRS resource includes at least one tenth symbol that meets a condition, the network device associates the uplink scheduling with the SRS resource, which means that the network device performs channel measurement based on the SRS received on the at least one tenth symbol.

Optionally, when an SRS resource does not include at least one tenth symbol that meets the condition, the network device can associate the uplink scheduling with an SRS resource that is earlier in time sequence and that meets the condition.

It should be understood that an antenna port related to the uplink scheduling is an antenna port used by the network device to schedule PUSCH transmission of the terminal device, and all the antenna ports related to the uplink scheduling may be all or a part of the antenna ports of the terminal device. That an antenna port corresponding to the at least one tenth symbol includes all antenna ports related to the uplink scheduling means that the antenna port corresponding to the at least one tenth symbol includes at least all the antenna ports related to the uplink scheduling. Therefore, the antenna port corresponding to the at least one tenth symbol may include a part of the antenna ports of the terminal device, or may include all the antenna ports of the terminal device.

The at least one tenth symbol may be all or a part of the at least one ninth symbol.

According to the technical solution provided in this application, when an SRS resource includes the at least one tenth symbol, the network device can associate uplink scheduling with the SRS resource, so that the network device can measure an uplink channel based on the SRS sent by the terminal device on the at least one tenth symbol, increasing a quantity of SRSs that can be used for uplink channel measurement, improving accuracy of uplink channel acquisition, and ensuring uplink transmission performance.

With reference to the third aspect, in some implementations of the third aspect, the SRS is sent on the at least one tenth symbol over all the antenna ports of the terminal device a same quantity of times.

Alternatively, the at least one tenth symbol corresponds to each antenna port a same quantity of times.

According to the foregoing technical solution, the SRS is sent on the at least one tenth symbol over each of all the antenna ports of the terminal device a same quantity of times, so that the network device performs uplink channel measurement on each antenna port a same quantity of times, ensuring accuracy of uplink channel measurement corresponding to each antenna port, and ensuring uplink transmission performance.

With reference to the third aspect, in some implementations of the third aspect, the at least one ninth symbol includes at least one symbol set, each of the at least one symbol set includes one symbol or multiple symbols, and the at least one tenth symbol is a symbol set having a largest quantity of symbols in the at least one symbol set.

It should be understood that the at least one ninth symbol may be considered as a third symbol set, and each symbol is an element in the symbol set. The at least one symbol set may be a subset of the third symbol set including the third symbol set. In other words, there is at least one pattern for randomly selecting one element or multiple elements from the third symbol set, and a result of each pattern corresponds to the at least one symbol set.

According to the foregoing technical solution, a quantity of the at least one tenth symbol associated with the uplink scheduling is as large as possible, so that the SRS used by the network device for channel measurement is repeated as many times as possible, improving a signal-to-noise ratio of the SRS used by the network device for channel measurement, improving accuracy of uplink channel measurement, and ensuring uplink transmission performance.

With reference to the third aspect, in some implementations of the third aspect, the at least one tenth symbol includes S types of symbols, each type of symbol of the S types of symbols corresponds to a different antenna port for sending the SRS, S is a positive integer, an end moment of each type of symbol of the at least one tenth symbol is later than an end moment of a same type of symbol in at least one eleventh symbol, and the at least one eleventh symbol is all symbols in the at least one ninth symbol other than the at least one tenth symbol.

According to the foregoing technical solution, time of the at least one tenth symbol associated with the uplink scheduling is as close as possible to time of the uplink scheduling, so that the network device performs uplink channel measurement based on a latest SRS of the terminal device as much as possible, improving accuracy of uplink channel measurement and ensuring uplink transmission performance.

With reference to the third aspect, in some implementations of the third aspect, the at least one ninth symbol corresponds to N time periods on the SRS resource, each of the N time periods corresponds to one symbol or multiple consecutive symbols, the at least one tenth symbol is at least one symbol of one symbol or multiple consecutive symbols corresponding to a fifth time period in the N time periods, and N is a positive integer, where the fifth time period is a time period having a largest quantity of symbols in the N time periods, and/or the fifth time period is a time period having a latest end moment in the N time periods.

It should be understood that the foregoing technical solution is applicable to a scenario in which phase continuity between two segments of symbols before and after an intermediate symbol in an SRS resource cannot be ensured due to transmission interruption on the intermediate symbol.

According to the foregoing technical solution, when transmission interruption on an intermediate symbol affects phase continuity, the network device can associate uplink scheduling with a segment of symbols, in multiple segments of symbols in an SRS resource and on which an SRS is received, that are most adjacent to the uplink scheduling in terms of time and/or that have a largest quantity of symbols, so that the network device can measure an uplink channel based on an SRS sent by the terminal device on at least one tenth symbol included in the segment of symbols, improving accuracy of uplink channel measurement and ensuring uplink transmission performance.

With reference to the third aspect, in some implementations of the third aspect, the symbol corresponding to the fifth time period includes at least one symbol set, each of the at least one symbol set includes one symbol or multiple consecutive symbols, and the at least one tenth symbol is a symbol set having a largest quantity of symbols in the at least one symbol set.

It should be understood that the symbol corresponding to the fifth time period may be considered as a fourth symbol set, and each symbol is an element in the symbol set. The at least one symbol set may be a subset of the fourth symbol set including the fourth symbol set. In other words, there is at least one pattern for randomly selecting one element or multiple consecutive elements from the fourth symbol set, and a result of each pattern corresponds to the at least one symbol set.

According to the foregoing technical solution, a quantity of the at least one tenth symbol in the fifth time period is as large as possible, so that the SRS used by the network device for channel measurement is repeated as many times as possible, improving a signal-to-noise ratio of the SRS used by the network device for channel measurement, improving accuracy of uplink channel measurement, and ensuring uplink transmission performance.

With reference to the third aspect, in some implementations of the third aspect, the symbol corresponding to the fifth time period includes at least one symbol set, each of the at least one symbol set includes one symbol or multiple consecutive symbols, and the at least one tenth symbol is a symbol set having a latest end moment in the at least one symbol set.

According to the foregoing technical solution, time of the at least one tenth symbol in the fifth time period is as close as possible to time of the uplink scheduling, so that the network device performs uplink channel measurement based on a latest SRS of the terminal device as much as possible, improving accuracy of uplink channel measurement and ensuring uplink transmission performance.

According to a fourth aspect, a communication apparatus is provided. The apparatus may be a terminal device, or may be a module (for example, a chip or a circuit) in the terminal device, or may be a logical node, a logical module, or software that can implement all or a part of functions of the terminal device. The apparatus includes: a receiving unit, configured to receive indication information, where the indication information indicates that SRS sending on a first symbol in an SRS resource is dropped; and a sending unit, configured to send the SRS on at least one second symbol, where the at least one second symbol is a symbol in at least one consecutive symbol that is in the SRS resource and that corresponds to a first time period, the first time period is a time period between a first moment and a second moment, the first moment is a moment at which the indication information is parsed by the terminal device, the second moment is a moment corresponding to a start location of the first symbol, and an antenna port that is for sending the SRS and that corresponds to the at least one second symbol includes all antenna ports of the terminal device.

With reference to the fourth aspect, in some implementations of the fourth aspect, the SRS is sent on the at least one second symbol over all the antenna ports of the terminal device a same quantity of times.

With reference to the fourth aspect, in some implementations of the fourth aspect, the at least one consecutive symbol that is in the SRS resource and that corresponds to the first time period includes at least one symbol set, each of the at least one symbol set includes one symbol or multiple consecutive symbols, and the at least one second symbol is a symbol set having a largest quantity of symbols in the at least one symbol set.

With reference to the fourth aspect, in some implementations of the fourth aspect, the at least one consecutive symbol that is in the SRS resource and that corresponds to the first time period includes at least one symbol set, each of the at least one symbol set includes one symbol or multiple consecutive symbols, and the at least one second symbol is a symbol set having a latest end moment in the at least one symbol set.

With reference to the fourth aspect, in some implementations of the fourth aspect, the apparatus further includes a processing unit, configured to drop sending the SRS on a third symbol, where the third symbol is all symbols that are in the SRS resource other than the first symbol and the at least one second symbol and that correspond to a second time period, and the second time period is a time period between the first moment and an end moment of the SRS resource.

For explanations and beneficial effect of related content of the communication apparatus provided in the fourth aspect, refer to the communication method shown in the first aspect. Details are not described herein again.

According to a fifth aspect, a communication apparatus is provided. The apparatus may be a terminal device, or may be a module (for example, a chip or a circuit) in the terminal device, or may be a logical node, a logical module, or software that can implement all or a part of functions of the terminal device. The apparatus includes: a receiving unit, configured to receive multiple pieces of indication information, where the multiple pieces of indication information indicate that SRS sending on multiple symbols in an SRS resource is dropped; and a sending unit, configured to send the SRS on at least one fourth symbol and at least one fifth symbol, where the at least one fourth symbol is a symbol in at least one consecutive symbol that is in the SRS resource and that corresponds to a third time period, the third time period is a time period between a third moment and a fourth moment, the third moment is a moment at which first indication information is parsed by the terminal device, the fourth moment is a moment corresponding to a start location of a sixth symbol, the first indication information is latest received indication information in the multiple pieces of indication information, the sixth symbol is a symbol on which SRS sending is dropped as indicated by the first indication information, the at least one fifth symbol is all symbols that are in the SRS resource other than at least one seventh symbol and that correspond to a fourth time period, the fourth time period is a time period between a start moment of the SRS resource and the third moment, and the at least one seventh symbol is a symbol on which SRS sending is dropped as indicated by at least one piece of second indication information, the at least one piece of second indication information is all indication information in the multiple pieces of indication information other than the first indication information, and antenna ports that are for sending the SRS and that correspond to the at least one fourth symbol and the at least one fifth symbol include all antenna ports of the terminal device.

With reference to the fifth aspect, in some implementations of the fifth aspect, a quantity of times the SRS is sent on the at least one fourth symbol is the same as a quantity of times the SRS is sent on the at least one fifth symbol over all the antenna ports of the terminal device.

With reference to the fifth aspect, in some implementations of the fifth aspect, the at least one consecutive symbol that is in the SRS resource and that corresponds to the third time period includes at least one symbol set, each of the at least one symbol set includes one symbol or multiple symbols, and the at least one fourth symbol is a symbol set having a largest quantity of symbols in the at least one symbol set.

With reference to the fifth aspect, in some implementations of the fifth aspect, the at least one fourth symbol includes S types of symbols, each type of symbol of the S types of symbols corresponds to a different antenna port for sending the SRS, S is a positive integer, an end moment of each type of symbol of the at least one fourth symbol is later than an end moment of a same type of symbol in at least one eighth symbol, the same type of symbols correspond to a same antenna port for sending the SRS, and the at least one eighth symbol is all symbols in the at least one consecutive symbol that is in the SRS resource other than the at least one fourth symbol and that corresponds to the third time period.

For explanations and beneficial effect of related content of the communication apparatus provided in the fifth aspect, refer to the communication method shown in the second aspect. Details are not described herein again.

According to a sixth aspect, a communication apparatus is provided. The apparatus may be a network device, or may be a module (for example, a chip or a circuit) in the network device, or may be a logical node, a logical module, or software that can implement all or a part of functions of the network device. The apparatus includes: a receiving unit, configured to receive an SRS on at least one ninth symbol in an SRS resource, where the SRS resource includes at least one tenth symbol, and the at least one tenth symbol is a symbol in the at least one ninth symbol; and a processing unit, configured to associate uplink scheduling with the SRS resource, where an antenna port corresponding to the at least one tenth symbol includes all antenna ports of a terminal device, or an antenna port corresponding to the at least one tenth symbol includes all antenna ports related to the uplink scheduling.

With reference to the sixth aspect, in some implementations of the sixth aspect, the SRS is sent on the at least one tenth symbol over all the antenna ports of the terminal device a same quantity of times.

With reference to the sixth aspect, in some implementations of the sixth aspect, the at least one ninth symbol includes at least one symbol set, each of the at least one symbol set includes one symbol or multiple symbols, and the at least one tenth symbol is a symbol set having a largest quantity of symbols in the at least one symbol set.

With reference to the sixth aspect, in some implementations of the sixth aspect, the at least one tenth symbol includes S types of symbols, each type of symbol of the S types of symbols corresponds to a different antenna port for sending the SRS, S is a positive integer, an end moment of each type of symbol of the at least one tenth symbol is later than an end moment of a same type of symbol in at least one eleventh symbol, and the at least one eleventh symbol is all symbols in the at least one ninth symbol other than the at least one tenth symbol.

With reference to the sixth aspect, in some implementations of the sixth aspect, the at least one ninth symbol corresponds to N time periods on the SRS resource, each of the N time periods corresponds to one symbol or multiple consecutive symbols, the at least one tenth symbol is a symbol of a symbol corresponding to a fifth time period in the N time periods, and N is a positive integer, where the fifth time period is a time period having a largest quantity of symbols in the N time periods, and/or the fifth time period is a time period having a latest end moment in the N time periods.

With reference to the sixth aspect, in some implementations of the sixth aspect, the symbol corresponding to the fifth time period includes at least one symbol set, each of the at least one symbol set includes one symbol or multiple consecutive symbols, and the at least one tenth symbol is a symbol set having a largest quantity of symbols in the at least one symbol set.

With reference to the sixth aspect, in some implementations of the sixth aspect, the symbol corresponding to the fifth time period includes at least one symbol set, each of the at least one symbol set includes one symbol or multiple consecutive symbols, and the at least one tenth symbol is a symbol set having a latest end moment in the at least one symbol set.

According to a seventh aspect, a communication apparatus is provided, which includes a processor. The processor is configured to cause, by executing a computer program or instructions or by using a logic circuit, the communication apparatus to perform the method according to the first aspect and any possible implementation of the first aspect; to cause the communication apparatus to perform the method according to the second aspect and any possible implementation of the second aspect; or to cause the communication apparatus to perform the method according to the third aspect and any possible implementation of the third aspect.

In a possible implementation, the communication apparatus further includes a memory, configured to store the computer program or the instructions.

In a possible implementation, the communication apparatus further includes a communication interface, configured to input and/or output a signal.

According to an eighth aspect, a communication apparatus is provided, which includes a logic circuit and an input/output interface. The input/output interface is configured to input and/or output a signal; and the logic circuit is configured to perform the method according to the first aspect or any possible implementation of the first aspect; or the logic circuit is configured to perform the method according to the second aspect and any possible implementation of the second aspect; or the logic circuit is configured to perform the method according to the third aspect and any possible implementation of the third aspect.

According to a ninth aspect, a computer-readable storage medium is provided. The computer-readable storage medium stores a computer program or instructions. When the computer program or the instructions are run on a computer, the method according to the first aspect or any possible implementation of the first aspect is performed; or the method according to the second aspect and any possible implementation of the second aspect is performed; or the method according to the third aspect and any possible implementation of the third aspect is performed.

According to a tenth aspect, a computer program product is provided, which includes instructions. When the instructions are run on a computer, the method according to the first aspect or any possible implementation of the first aspect is performed; or the method according to the second aspect and any possible implementation of the second aspect is performed; or the method according to the third aspect and any possible implementation of the third aspect is performed.

## BRIEF DESCRIPTION OF DRAWINGS

FIG. 1 is a diagram of a communication system 100 applicable to an embodiment of this application;

FIG. 2 is a diagram of a cyclic repetition manner applicable to an embodiment of this application;

FIG. 3 is a diagram of a sequential repetition manner applicable to an embodiment of this application;

FIG. 4 is a schematic flowchart of a communication method 400 applicable to an embodiment of this application;

FIG. 5 is a diagram of OFDM symbols in an SRS resource applicable to an embodiment of this application;

FIG. 6 is another schematic flowchart of a communication method 600 applicable to an embodiment of this application;

FIG. 7 is another diagram of OFDM symbols in an SRS resource applicable to an embodiment of this application;

FIG. 8 is another diagram of OFDM symbols in an SRS resource applicable to an embodiment of this application;

FIG. 9 is another diagram of OFDM symbols in an SRS resource applicable to an embodiment of this application;

FIG. 10 is another schematic flowchart of a communication method 1000 applicable to an embodiment of this application;

FIG. 11 is another diagram of OFDM symbols in an SRS resource applicable to an embodiment of this application;

FIG. 12 is another diagram of OFDM symbols in an SRS resource applicable to an embodiment of this application;

FIG. 13 is a block diagram of a communication apparatus 1300 applicable to an embodiment of this application;

FIG. 14 is a block diagram of a communication apparatus 1400 applicable to an embodiment of this application; and

FIG. 15 is a block diagram of a communication apparatus 1500 applicable to an embodiment of this application.

## DESCRIPTION OF EMBODIMENTS

The technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system.

By way of example rather than limitation, in embodiments of this application, the terminal device in embodiments of this application may be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a terminal device unit (subscriber unit), a terminal device station, a terminal device agent, a terminal device apparatus, or a terminal in V2X communication. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network or a terminal in a future evolved network, or the like. This is not limited in embodiments of this application.

The terminal device in embodiments of this application may alternatively be a mobile phone (mobile phone), a tablet computer (pad), a computer having a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a wireless terminal in self-driving (self-driving), a wireless terminal in telemedicine (remote medical), a wireless terminal in smart grid (smart grid), a wireless terminal in transportation safety (transportation safety), a wireless terminal in transportation safety, a wireless terminal in smart city (smart city), or a wireless terminal in smart home (smart home)

The wearable device may also be referred to as a wearable intelligent device, and is a generic term for wearable devices such as a head-mounted display, XR glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicate to one type of application function and need to collaboratively work with other devices such as smartphones, for example, various smart bands, or smart jewelry for monitoring physical signs.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for human-machine interconnection or thing-thing interconnection.

In addition, in this application, the terminal device may further include sensors such as an intelligent printer, a train detector, and a gas station. Main functions include collecting data (some terminal devices), receiving control information and downlink data from a network device, sending an electromagnetic wave, and transmitting uplink data to the network device.

In embodiments of this application, the network device may be a device that is configured to communicate with the terminal device, and the network device may be a base transceiver station (base transceiver station, BTS) in a global system for mobile communications (global system for mobile communications, GSM) system or code division multiple access (code division multiple access, CDMA), may be a NodeB (NodeB, NB) in a wideband code division multiple access (wideband code division multiple access, WCDMA) system, may be an evolved NodeB (evolved NodeB, eNB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network and a future communication system, a network device in a future evolved PLMN network, or the like, may be an access point (access point, AP) in a WLAN, or may be a gNB in a new radio (new radio, NR) system. This is not limited in embodiments of this application. It may be understood that all or a part of functions of the network device in this application may alternatively be implemented by using a software function running on hardware, or may be implemented by using an instantiated virtualization function on a platform (for example, a cloud platform).

In addition, in embodiments of this application, an access network device serves a cell. The terminal device communicates with the access network device on a transmission resource (for example, a frequency domain resource, namely, a spectrum resource) for the cell. The cell may be a cell corresponding to the access network device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are suitable for providing a high-rate data transmission service.

A core network device may be connected to multiple access network devices, configured to control the access network devices, and can distribute data received from a network side (for example, an internet) to the access network devices.

In addition, in this application, the network device may include a gNB (gNB), for example, a macro base station, a micro base station, an indoor hotspot, or a relay node, and has functions of: sending a radio wave to the terminal device, to implement downlink data transmission and control uplink transmission by sending scheduling information; and receiving a radio wave sent by the terminal device, to receive uplink data transmission.

The foregoing listed functions and specific implementations of the terminal device, the access network device, and the core network device are merely examples for description, and this application is not limited thereto.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry an instruction and/or data.

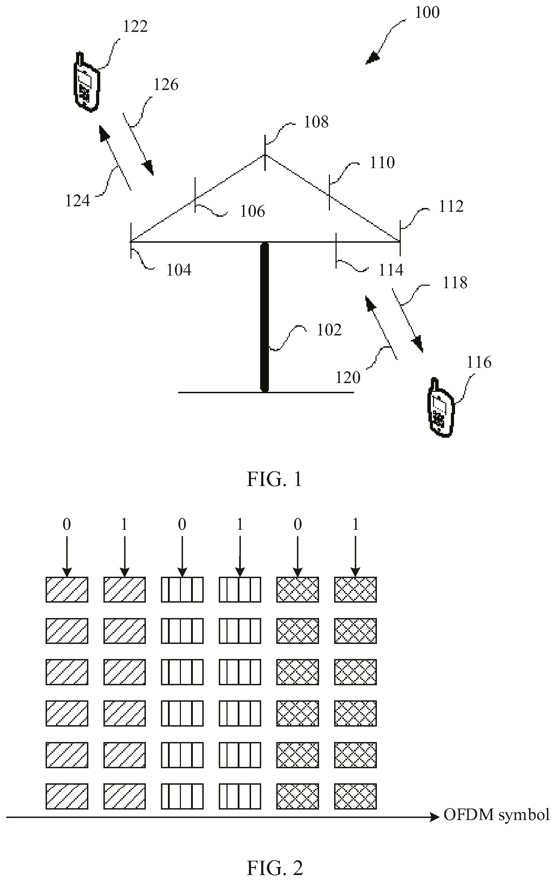

FIG. 1 is a diagram of a system 100 applicable to a communication method according to an embodiment of this application. As shown in FIG. 1, the system 100 includes an access network device 102, and the access network device 102 may include one or more antennas, for example, antennas 104, 106, 108, 110, 112, and 114. In addition, the access network device 102 may additionally include a transmitter chain and a receiver chain. A person of ordinary skill in the art may understand that both the transmitter chain and the receiver chain may include multiple components (for example, a processor, a modulator, a multiplexer, a demodulator, a demultiplexer, or an antenna) related to signal sending and receiving.

The access network device 102 may communicate with multiple terminal devices (for example, a terminal device 116 and a terminal device 122). However, it may be understood that the access network device 102 may communicate with any quantity of terminal devices that are similar to the terminal device 116 or the terminal device 122. The terminal devices 116 and 122 may be, for example, a head mounted display, XR glasses, a VR terminal, a cellular phone, a smartphone, a portable computer, a handheld communication device, a handheld computing device, a satellite radio apparatus, a global positioning system, a PDA, and/or any other suitable device configured to perform communication in the wireless communication system 100.

As shown in FIG. 1, the terminal device 116 communicates with the antennas 112 and 114. The antennas 112 and 114 send information to the terminal device 116 over a forward link (also referred to as a downlink link) 118, and receive information from the terminal device 116 over a reverse link (also referred to as an uplink link) 120. In addition, the terminal device 122 communicates with the antennas 104 and 106. The antennas 104 and 106 send information to the terminal device 122 over a forward link 124, and receive information from the terminal device 122 over a reverse link 126.

Each antenna (or an antenna group including multiple antennas) and/or an area designed for communication are/is referred to as a sector of the access network device 102. For example, an antenna group may be designed to communicate with a terminal device in a sector within a coverage area of the access network device 102. The access network device may send signals to all terminal devices in a corresponding sector by using a single antenna or a multi-antenna transmit diversity. In a process in which the access network device 102 communicates with the terminal devices 116 and 122 over the forward links 118 and 124 respectively, a transmit antenna of the access network device 102 may improve signal-to-noise ratios of the forward links 118 and 124 by beamforming. In addition, compared with a manner in which an access network device uses a single-antenna or a multi-antenna transmit diversity to transmit signals to all terminal devices served by the access network device, when the access network device 102 uses beamforming to transmit signals to the terminal devices 116 and 122 that are randomly scattered in a related coverage area, interference to a mobile device in a neighboring cell is less.

In a given time, the access network device 102, the terminal device 116, or the terminal device 122 may be a wireless communication sending apparatus and/or a wireless communication receiving apparatus. When sending data, the wireless communication sending apparatus may encode data for transmission. Specifically, the wireless communication sending apparatus may obtain a number of data bits (for example, generated, received from other communication apparatuses, or stored in memory) to be sent to the wireless communication receiving apparatus over a channel. The data bits may be included in a transport block (or multiple transport blocks) of data, and the transport block may be segmented to generate multiple code blocks.

In addition, the communication system 100 may be a PLMN network, a device-to-device (device-to-device, D2D) network, a machine-to-machine (machine to machine, M2M) network, an IoT network, or another network. FIG. 1 is merely a simplified diagram as an example. The network may further include another access network device not shown in FIG. 1.

In embodiments of this application, data or information may be carried by using a time-frequency resource. The time-frequency resource may include a time-domain resource and a frequency-domain resource. In time domain, the time-frequency resource may include one or more time units.

One time unit may be one orthogonal frequency division multiplexing (orthogonal frequency division multiplexing, OFDM) symbol, one mini-slot (mini-slot), one slot (slot), or one subframe (subframe). Duration of one subframe in time domain may be 1 millisecond (ms). One slot includes seven or 14 OFDM symbols. One mini-slot may include at least one OFDM symbol (for example, two OFDM symbols, four OFDM symbols, seven OFDM symbols, or any quantity of symbols fewer than or equal to 14 OFDM symbols).

In a communication system, for example, a 5G system, to resist a path loss in a high frequency scenario, two communication devices that have a communication connection may obtain gains through beamforming (beamforming) separately. A transmit end (for example, a network device) and a receive end (for example, a terminal device) may obtain a pairing relationship between a transmission beam and a reception beam through beam (beam) training.

The beam may be understood as a spatial filter (spatial filter) or a spatial parameter (spatial parameter). A beam used for sending a signal may be referred to as a transmission beam (transmission beam, Tx beam), and may be a spatial domain transmit filter (spatial domain transmit filter) or a spatial domain transmit parameter (spatial domain transmit parameter). A beam used for receiving a signal may be referred to as a reception beam (reception beam, Rx beam), and may be a spatial domain receive filter (spatial domain receive filter) or a spatial domain receive parameter (spatial domain receive parameter).

A technology for forming the beam may be a beamforming technology or another technology. For example, the beamforming technology may be specifically a digital beamforming technology, an analog beamforming technology, a hybrid digital/analog beamforming technology, or the like. The transmission beam may refer to signal strength distribution formed in different directions in space after a signal is transmitted through an antenna, and the reception beam may refer to signal strength distribution in different directions in space of a radio signal received through an antenna.

In the NR protocol, the beam may be, for example, a spatial filter (spatial filter). However, it should be understood that this application does not exclude a possibility of defining another term in a future protocol to represent a same or similar meaning.

The beam pairing relationship is a pairing relationship between a transmission beam and a reception beam, that is, a pairing relationship between a spatial domain transmit filter and a spatial domain receive filter. A large beamforming gain can be obtained through transmission of a signal between a transmission beam and a reception beam that have a beam pairing relationship.

In an implementation, the transmit end may transmit a reference signal through beam sweeping, and the receive end may also receive a reference signal through beam sweeping. Specifically, the transmit end may form different directional beams in space through beamforming, and may perform polling on multiple different directional beams, to transmit a reference signal over different directional beams, so that power for transmitting the reference signal can reach a maximum value in a direction of a transmission beam. The receive end may also form different directional beams in space through beamforming, and may perform polling on multiple different directional beams, to receive a reference signal over different directional beams, so that power of receiving the reference signal by the receive end can reach a maximum value in a direction of a reception beam.

To facilitate understanding of the technical solutions of this application, the following briefly describes terms used in embodiments of this application.

1. Channel sounding reference signal (sounding reference signal, SRS)

The SRS is an uplink reference signal sent by a terminal device to an access network device, and is used by the access network device to perform channel measurement based on the received SRS, obtain uplink (uplink, UL) channel information of the terminal device, and perform data scheduling on the terminal device based on the UL channel information.

2. Antenna port (port)

The antenna port can be referred to as a port for short. The antenna port may be understood as a transmit antenna identified by a receiving device, or a transmit antenna that can be distinguished in space. One antenna port may be preconfigured for each virtual antenna, each virtual antenna may be a weighted combination of multiple physical antennas, and each antenna port may correspond to one reference signal. Therefore, each antenna port may be referred to as a reference signal port, for example, a channel state information reference signal (channel state information reference signal, CSI-RS) port or an SRS port. In embodiments of this application, the antenna port may be a transceiver unit (transceiver unit, TxRU).

Configuration information of a reference signal resource may be for configuring a transmission attribute of the reference signal. For example, the reference signal resource in embodiments of this application may include a CSI-RS resource (CSI-RS resource), an SRS resource (SRS resource), and the like. For example, configuration information of the SRS resource is used to configure multiple SRS resources, and each SRS resource includes $N_{ap}^{SRS} \epsilon \{1,2,4,8\}$ SRS ports. Generally, multiple SRS ports included in each SRS resource are orthogonal.

3. Reference signal repetition

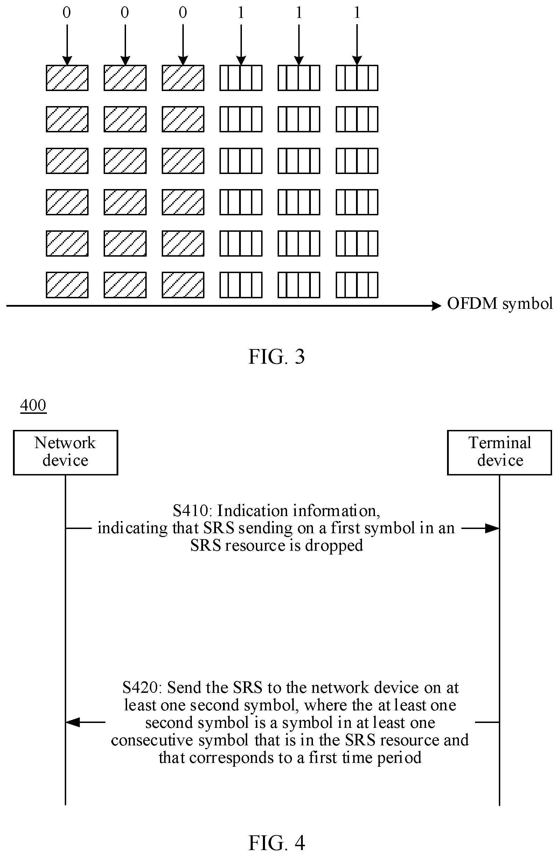

A sending device repeatedly sends a same reference signal, and a receiving device may combine (that is, perform coherent addition on) signals received multiple times, to improve a signal-to-noise ratio (signal to interference plus noise ratio, SINR) of the reference signal. For example, one SRS resource includes two SRS ports, and SRSs are sent over the two SRS ports on multiple consecutive symbols by using a same physical antenna, a same transmit power, and a same bandwidth. SRS repetition includes cyclic repetition (cyclic repetition) and sequential repetition (sequential repetition). Cyclic repetition means that all ports are mapped to s consecutive symbols, and then repetition is performed $R = m/s$ times, as shown in FIG. 2. Sequential repetition means that all ports are divided into s groups, and ports in each group are mapped to consecutive $R = m/s$ symbols, as shown in FIG. 3. For example, two SRS ports shown in FIG. 2 and FIG. 3 are 0 and 1 respectively, and s=2, m=6, and R=3, as shown in FIG. 2 and FIG. 3.

4. Reference signal transmission dropping (dropping)

When reference signal transmission conflicts with another transmission and the another transmission has a higher priority, reference signal transmission on a symbol on which the conflict occurs is dropped. For example, when an SRS conflicts with a physical uplink control channel (physical uplink control channel, PUCCH), SRS transmission on a symbol on which the conflict occurs is dropped.

5. Coherence/Non-coherence capability

Before performing uplink transmission, a terminal device reports, to a network device, a quantity of antenna ports that can be supported by the terminal device for signal sending. The quantity of antenna ports that can be supported by the terminal device for signal sending represents a maximum quantity of transmission layers for performing uplink transmission by the terminal device. Further, the terminal device may further report, to the network device, a maximum coherence capability between antenna ports of the terminal device.

Specifically, for a terminal device having two antenna ports, a maximum coherence capability reported by the terminal device includes two types: fully coherent and non-coherent. For a terminal device having four antenna ports, a maximum coherence capability reported by the terminal device includes three types: fully coherent, partially coherent, and non-coherent. For a terminal device having eight antenna ports, a maximum coherence capability reported by the terminal device includes three types: fully coherent, partially coherent, and non-coherent.

Fully coherent indicates that phase calibration is completed between all antenna ports of the terminal device, and phase weighting may be performed. In other words, the terminal device may send data of a same layer by using all antenna ports. Partially coherent indicates that phase calibration is completed in an antenna port group of the terminal device, and phase weighting may be performed. However, phase calibration is not completed between antenna port groups of the terminal device, and phase weighting cannot be performed. Each antenna port group includes at least one antenna port. Non-coherent indicates that phase calibration is not completed between all antenna ports of the terminal device, and phase weighting cannot be performed. In other words, the terminal device needs to use one antenna port to send data of one layer, and use another antenna port to send data of another layer.

6. Transmission layer (layer)

In a multiple-input multiple-output (multiple-input multiple-output, MIMO) technology, a transmission layer can be considered as a data stream that can be independently transmitted. To improve spectrum resource utilization and improve a data transmission capability of a communication system, data may be transmitted between a network device and a terminal device by using multiple layers.

Currently, the network device performs channel measurement based on a received SRS, and obtains UL channel information of the terminal device, to perform data scheduling for the terminal device based on the UL channel information, and the terminal device transmits a PUSCH based on scheduling of the network device. When SRS transmission on a most adjacent SRS resource conflicts with a first transmission object or a second transmission object, and consequently all or a part of SRS transmission on the SRS resource is dropped, the network device performs channel measurement based on an SRS received on an earlier SRS resource, and performs PUSCH scheduling based on a measurement result.

However, PUSCH scheduling based on the measurement result of the SRS on the earlier SRS resource affects accuracy of uplink channel acquisition and uplink transmission performance. In addition, there is a timing relationship between SRS sending and information from the network device indicating to the terminal device that all or a part of SRS transmission on the SRS resource is dropped, dropping all or a part of SRS transmission by the terminal device upon indication may take place in an SRS sending process. Consequently, accuracy of uplink channel acquisition and uplink transmission performance are further affected.

In view of this, this application provides a reference signal transmission method 400, to improve accuracy of uplink channel acquisition and improve uplink transmission performance, as shown in FIG. 4.

In this embodiment, an example in which a terminal device and a network device are used as execution bodies of interaction illustration is used to illustrate the method. However, the execution bodies of the interaction illustration are not limited in this application. For example, the network device in FIG. 4 may alternatively be a chip, a chip system, or a processor that supports the network device in implementing the method, or may be a logical module or software that can implement all or a part of functions of the network device. The terminal device in FIG. 4 may alternatively be a chip, a chip system, or a processor that supports the terminal device in implementing the method, or may be a logical module or software that can implement all or a part of functions of the terminal device.

In this embodiment, a sounding reference signal SRS is used as an example to describe the technical solutions in embodiments of this application. The technical solutions of this application may be further used in a scenario of transmitting another reference signal for channel measurement.

Step S410: A network device sends indication information to a terminal device. Correspondingly, the terminal device receives the indication information from the network device.

Specifically, the indication information indicates that SRS sending on a first symbol in an SRS resource is dropped. The SRS resource may be a resource to be used by the network device for SRS sending, or a resource being used for SRS sending. The SRS resource may correspond to one time unit in time domain, and the time unit includes multiple consecutive symbols including the first symbol.

For example, a reason why SRS sending or receiving on the first symbol is dropped may be: Sending the SRS by the terminal device on the first symbol conflicts with sending a first transmission object, a second transmission object, or a third transmission object by the terminal device on the first symbol; or if a first transmission object, a second transmission object, or a third transmission object has a higher priority on the first symbol, SRS sending on the first symbol is dropped; or SRS sending on the first symbol is configured to be zero power. SRS sending or receiving on the first symbol may be dropped for another reason. This is not limited in this application.

Single piece of indication information may indicate that SRS sending on multiple symbols in the SRS resource is dropped. In this case, the first symbol may be the 1st symbol on which SRS sending is dropped as indicated by each piece of indication information, that is, an earliest symbol in time sequence.

Step S420: The terminal device sends the SRS to the network device on at least one second symbol. Correspondingly, the network device receives, on the at least one second symbol, the SRS sent by the terminal device.

The at least one second symbol is a symbol in at least one consecutive symbol that is in the SRS resource and that corresponds to a first time period. The first time period is a time period between a first moment and a second moment, the first moment is a moment at which the indication information is parsed by the terminal device, and the second moment is a moment corresponding to a start location of the first symbol. In other words, the first time period is a time period from determining by the terminal device that SRS sending on the first symbol is dropped to starting transmission of a transmission object on the first symbol. Because the second moment is located in the time unit corresponding to the SRS resource, and the first moment is earlier than the second moment in time sequence, the first time period is located in the time unit corresponding to the SRS resource or at least partially overlaps the time unit corresponding to the SRS resource. Therefore, one symbol or multiple consecutive symbols in the SRS resource correspond to the first time period, and the at least one second symbol is a symbol in the one symbol or multiple consecutive symbols.

In addition, an antenna port that is for sending the SRS and that corresponds to the at least one second symbol includes all antenna ports of the terminal device.

According to the method 400, when SRS sending on a part of symbols in the SRS resource is dropped, the terminal device can select, based on a timing relationship between an SRS and indication information indicating SRS transmission dropping, the at least one second symbol that is in the SRS resource and that can be used for sending the SRS, so that the network device can measure an uplink channel based on the SRS sent by the terminal device on the at least one second symbol, improving accuracy of uplink channel acquisition and ensuring uplink transmission performance.

It should be understood that the foregoing "all antenna ports of the terminal device" may be all antenna ports used by the terminal device for sending the SRS, and all the antenna ports used by the terminal device for sending the SRS may be configured by the network device.

For example, a quantity of antenna ports of the terminal device may be 1, 2, 4, 8, or the like. When the terminal device has eight antenna ports, all the antenna ports of the terminal device may be eight antenna ports, or may be fewer than eight antenna ports. This is not limited in this application.

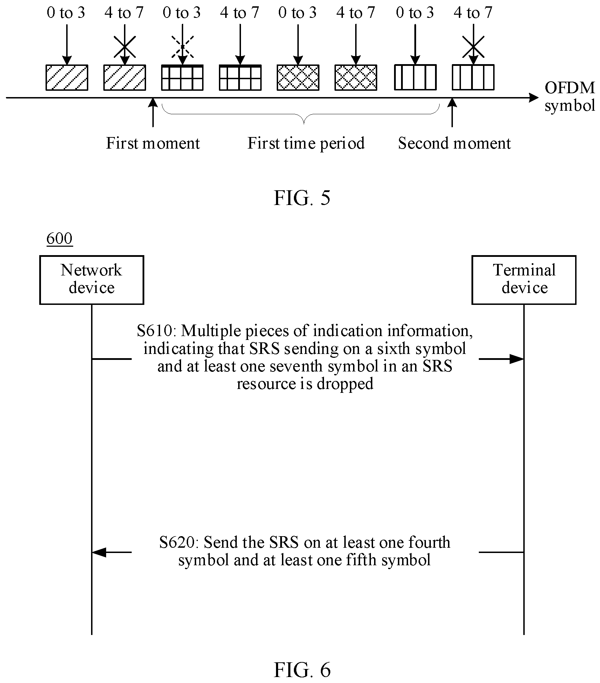

For example, all the antenna ports of the terminal device are eight antenna ports, which are numbered 0, 1, 2, 3, 4, 5, 6, and 7 respectively. As shown in FIG. 5, OFDM symbols on the SRS resource include two types of symbols. A first-type symbol corresponds to the antenna ports 0 to 3 of the terminal device, and a second-type symbol corresponds to the antenna ports 4 to 7 of the terminal device. In the cyclic repetition mode, in time sequence, the 1st OFDM symbol corresponds to the antenna ports 0 to 3 of the terminal device, the 2nd OFDM symbol corresponds to the antenna ports 4 to 7 of the terminal device, the 3rd OFDM symbol corresponds to the antenna ports 0 to 3 of the terminal device, the 4th OFDM

symbol corresponds to the antenna ports 4 to 7 of the terminal device, and so on. The first moment is a moment at which the indication information is parsed by the terminal device, and is located between the 2nd OFDM symbol and the 3rd OFDM symbol. At this point, transmission of a corresponding signal on the 1st OFDM symbol and the 2nd OFDM symbol is completed (for example, on the 1st OFDM symbol) or dropped (for example, on the 2nd OFDM symbol). Therefore, the terminal device cannot change a transmission status of the 1st OFDM symbol and the 2nd OFDM symbol. The indication information indicates that SRS transmission on the 8th OFDM symbol is dropped, the second moment is a start moment of the 8th OFDM symbol, the first time period between the first moment and the second moment corresponds to five consecutive symbols, that is, the 3rd OFDM symbol, the 4th OFDM symbol, the 5th OFDM symbol, the 6th OFDM symbol, and the 7th OFDM symbol, and the SRS can be transmitted on all the five consecutive symbols. Because an SRS transmitted on an OFDM symbol after the 8th OFDM symbol may not be used, for example, phase continuity between the 7th OFDM symbol and the 9th OFDM symbol cannot be ensured due to transmission interruption on the 8th OFDM symbol, according to the technical solution of the method 400, at least one second symbol is determined from the five symbols corresponding to the first time period for SRS transmission.

The at least one second symbol includes the foregoing two types of symbols, that is, the at least one second symbol includes at least one OFDM symbol corresponding to the antenna ports 0 to 3 of the terminal device and at least one OFDM symbol corresponding to the antenna ports 4 to 7 of the terminal device. In addition, when phase continuity between a previous symbol and a next symbol cannot be ensured due to transmission interruption on an intermediate symbol, the at least one second symbol is consecutive. For example, in the case shown in FIG. 5, the 3rd OFDM symbol, the 4th OFDM symbol, the 5th OFDM symbol, the 6th OFDM symbol, and the 7th OFDM symbol can correspond to all the eight antenna ports 0 to 7 of the terminal device. Therefore, the at least one second symbol may be the 3rd OFDM symbol, the 4th OFDM symbol, the 5th OFDM symbol, the 6th OFDM symbol, and the 7th OFDM symbol. Alternatively, the at least one second symbol may be a part of symbols, in the five symbols, that can correspond to all the eight antenna ports. For example, the at least one second symbol may be the 4th OFDM symbol and the 5th OFDM symbol. All combinations are not enumerated herein.

Optionally, the SRS is sent on the at least one second symbol over all the antenna ports of the terminal device a same quantity of times, or in other words, the at least one second symbol corresponds to each antenna port a same quantity of times.

It should be understood that "a quantity of times the at least one second symbol corresponds to an antenna port" is a quantity of symbols that are in the at least one second symbol and that correspond to the antenna port. Therefore, the foregoing "the at least one second symbol corresponds to each antenna port a same quantity of times" means that each antenna port corresponds to a same quantity of symbols in the at least one second symbol. For example, it is assumed that the at least one second symbol is the 3rd OFDM symbol, the 4th OFDM symbol, the 5th OFDM symbol, the 6th OFDM symbol, and the 7th OFDM symbol shown in FIG. 5. The antenna port 0 is used as an example. Because the 3rd OFDM symbol, the 5th OFDM symbol, and the 7th OFDM symbol are corresponding to the antenna ports 0 to 3, total three symbols in the at least one second symbol can correspond to the antenna port 0. Therefore, in this case, the at least one second symbol corresponds to the antenna port 0 three times. For a quantity of times a symbol corresponds to an antenna port in the following, refer to related descriptions of "a quantity of times the at least one second symbol corresponds to an antenna port". Details are not described in the following again.

For example, as shown in FIG. 5, it is assumed that the determined at least one second symbol is all the five symbols corresponding to the first time period. There are three symbols of the first type corresponding to the antenna ports 0 to 3 of the terminal device, and there are only two symbols of the second type corresponding to the antenna ports 4 to 7 of the terminal device. Therefore, the SRS is sent three times on the 3rd OFDM symbol, the 5th OFDM symbol, and the 7th OFDM symbol over the antenna ports 0 to 3 of the terminal device, and the SRS is sent twice on the 4th OFDM symbol and the 6th OFDM symbol over the antenna ports 4 to 7 of the terminal device. In this case, the first reference signal is sent on the at least one second symbol over all the antenna ports of the terminal device different quantities of times, and accuracy of uplink channel measurement corresponding to each antenna port of the terminal device cannot be ensured. It is assumed that the determined at least one second symbol is the 6th OFDM symbol and the 7th OFDM symbol. In this case, the SRS is sent once on the 7th OFDM symbol over the antenna ports 0 to 3 of the terminal device, and the SRS is sent once on the 6th OFDM symbol over the antenna ports 4 to 7 of the terminal device, so that uplink channel measurement is performed a same quantity of times on each antenna port, ensuring accuracy of uplink channel measurement corresponding to each antenna port of the terminal device, and ensuring uplink transmission performance.

As described above, there may be multiple results of determining the at least one second symbol meeting a condition from the at least one consecutive symbol that is in the SRS resource and that corresponds to the first time period. For this case, this application provides two implementations, to determine one result from multiple results.

In a first implementation, the at least one consecutive symbol that corresponds to the first time period includes at least one symbol set, each of the at least one symbol set includes one symbol or multiple consecutive symbols, and the at least one second symbol is a symbol set having a largest quantity of symbols in the at least one symbol set.

It should be understood that the at least one consecutive symbol that corresponds to the first time period may be considered as a first symbol set, and each symbol is an element in the symbol set. The at least one symbol set may be a subset of the first symbol set including the first symbol set. In other words, there is at least one pattern for randomly selecting one element or multiple consecutive elements from the first symbol set, and a result of each pattern corresponds to the at least one symbol set.

For example, as shown in FIG. 5, it is assumed that the condition the at least one second symbol meets is that an antenna port that is for sending the SRS and that corresponds to the at least one second symbol includes all the antenna ports of the terminal device, and the SRS is sent on the at least one second symbol over all the antenna ports of the terminal device a same quantity of times. The at least one symbol set corresponding to the multiple results may include {the 3$^{rd}$ OFDM symbol, the 4$^{th}$ OFDM symbol}, {the 4$^{th}$ OFDM symbol, the 5$^{th}$ OFDM symbol}, {the 5$^{th}$ OFDM symbol, the 6$^{th}$ OFDM symbol}, {the 6$^{th}$ OFDM symbol, the 7$^{th}$ OFDM symbol}, {the 3$^{rd}$ OFDM symbol, the 4$^{th}$ OFDM symbol, the 5$^{th}$ OFDM symbol, the 6$^{th}$ OFDM symbol}, and {the 4$^{th}$ OFDM symbol, the 5$^{th}$ OFDM symbol, the 6$^{th}$ OFDM symbol, the 7$^{th}$ OFDM symbol}. The symbol set having a largest quantity of symbols is {the 3$^{rd}$ OFDM symbol, the 4$^{th}$ OFDM symbol, the 5$^{th}$ OFDM symbol, the 6$^{th}$ OFDM symbol} or {the 4$^{th}$ OFDM symbol, the 5$^{th}$ OFDM symbol, the 6$^{th}$ OFDM symbol, the 7$^{th}$ OFDM symbol} that includes four symbols.

In the foregoing manner, a quantity of the at least one second symbol for sending the SRS is as large as possible, so that the terminal device maintains an advantage of SRS repetition as much as possible, improving a signal-to-noise ratio of receiving the SRS by the network device, improving accuracy of uplink channel measurement, and ensuring uplink transmission performance.

In a second implementation, the at least one consecutive symbol that corresponds to the first time period includes at least one symbol set, each of the at least one symbol set includes one symbol or multiple consecutive symbols, and the at least one second symbol is a symbol set having a latest end moment in the at least one symbol set.

It should be understood that the end moment of the symbol set is an end moment of a symbol whose end moment is the latest in the set. Alternatively, the end moment of the symbol set is an end moment of a time period corresponding to consecutive symbols included in the set.

For example, as shown in FIG. 5, it is assumed that the condition the at least one second symbol meets is that an antenna port that is for sending the SRS and that corresponds to the at least one second symbol includes all the antenna ports of the terminal device, and the SRS is sent on the at least one second symbol over all the antenna ports of the terminal device a same quantity of times. The at least one symbol set corresponding to the multiple results may include {the 3$^{rd}$ OFDM symbol, the 4$^{th}$ OFDM symbol}, {the 4$^{th}$ OFDM symbol, the 5$^{th}$ OFDM symbol}, {the 5$^{th}$ OFDM symbol, the 6$^{th}$ OFDM symbol}, {the 6$^{th}$ OFDM symbol, the 7$^{th}$ OFDM symbol}, {the 3$^{rd}$ OFDM symbol, the 4$^{th}$ OFDM symbol, the 5$^{th}$ OFDM symbol, the 6$^{th}$ OFDM symbol}, and {the 4$^{th}$ OFDM symbol, the 5$^{th}$ OFDM symbol, the 6$^{th}$ OFDM symbol, the 7$^{th}$ OFDM symbol}. The symbol set having a latest end moment is {the 6$^{th}$ OFDM symbol, the 7$^{th}$ OFDM symbol} or {the 4$^{th}$ OFDM symbol, the 5$^{th}$ OFDM symbol, the 6$^{th}$ OFDM symbol, the 7$^{th}$ OFDM symbol} that includes the 7$^{th}$ OFDM symbol.

In the foregoing manner, time of the at least one second symbol for sending the SRS is as close as possible to time of performing uplink scheduling by the network device, so that the network device performs uplink channel measurement based on a latest SRS of the terminal device as much as possible, improving accuracy of uplink channel measurement and ensuring uplink transmission performance.

The foregoing two implementations may be used separately or jointly. This is not limited in this application.

For example, as shown in FIG. 5, it is assumed that the condition the at least one second symbol meets is that an antenna port that is for sending the SRS and that corresponds to the at least one second symbol includes all the antenna ports of the terminal device, and the SRS is sent on the at least one second symbol over all the antenna ports of the terminal device a same quantity of times. In this case, the finally determined at least one second symbol is the symbol set {the 4$^{th}$ OFDM symbol, the 5$^{th}$ OFDM symbol, the 6$^{th}$ OFDM symbol, the 7$^{th}$ OFDM symbol} having a largest quantity of symbols and a latest end moment.

In addition, after determining the at least one second symbol, the terminal device drops SRS sending on a symbol corresponding to the first time period other than the at least one second symbol. In other words, the terminal device sends the SRS to the network device only on the at least one second symbol in the first time period.

For example, as shown in FIG. 5, it is assumed that the finally determined at least one second symbol is the 4$^{th}$ OFDM symbol, the 5$^{th}$ OFDM symbol, the 6$^{th}$ OFDM symbol, and the 7$^{th}$ OFDM symbol. In this case, the terminal device actively drops SRS transmission on the 3$^{rd}$ OFDM symbol, saving resources used for SRS transmission, and avoiding a waste of SRS resources caused by transmission of an invalid SRS.

It should be understood that if the at least one second symbol that meets the foregoing condition does not exist in the symbols corresponding to the first time period, the terminal device drops SRS sending on all the symbols corresponding to the first time period. In other words, the terminal device does not send the SRS to the network device in the first time period.

It should be understood that the method 400 may be repeatedly performed on a same SRS resource. In other words, the terminal device may receive multiple pieces of different indication information at multiple different moments, and different indication information indicates that SRS sending on different symbols in a same SRS resource is dropped. In this case, for multiple pieces of indication information received at different moments, the terminal device may sequentially perform, based on a time sequence of reception, the method provided in the first aspect.

If the at least one second symbol that meets the foregoing condition does not exist in the at least one consecutive symbol corresponding to a first time period corresponding to one piece of indication information, the terminal device may actively drop SRS sending on the at least one consecutive symbol corresponding to the first time period corresponding to the indication information. If the at least one second symbol that meets the foregoing condition exists in the at least one consecutive symbol corresponding to a first time period corresponding to one piece of indication information, this embodiment of this application provides two different processing manners.

In a first processing manner, the terminal device actively drops SRS transmission only on a symbol other than the at least one second symbol in the at least one consecutive symbol corresponding to the first time period corresponding to the indication information. In other words, for each of the multiple pieces of indication information, the terminal device determines, each time, whether to drop SRS sending on a symbol corresponding to a first time period corresponding to one of the multiple pieces of indication information, and does not perform determining for a symbol corresponding to a time period other than the first time period.

According to the foregoing processing manner, the terminal device may finally send the SRS to the network device on multiple segments of consecutive symbols in one SRS resource, and the multiple segments of consecutive symbols are inconsecutive to each other. When phase continuity between a previous symbol and a next symbol cannot be ensured due to transmission interruption on an intermediate symbol, the network device can perform uplink channel measurement only by using an SRS received on one segment of consecutive symbols in the multiple segments of consecutive symbols. In this case, the network device may perform uplink channel measurement by using an SRS received on a segment of consecutive symbols having a largest quantity of symbols in the multiple segments of consecutive symbols, and/or the network device may perform uplink channel measurement by using an SRS received on a segment of consecutive symbols having a latest end moment in the multiple segments of consecutive symbols. For a specific implementation, refer to the following embodiments related to the network device. Details are not described herein again.

In a second processing manner, the terminal device actively drops SRS transmission on a third symbol. Specifically, the third symbol is all symbols that are in the SRS resource other than the first symbol and the at least one second symbol and that correspond to a second time period, and the second time period is a time period between the first moment and an end moment of the SRS resource, where the end moment of the SRS resource is an end moment of a last symbol in the SRS resource. In other words, if the at least one second symbol that meets the condition exists in symbols corresponding to a first time period corresponding to one piece of indication information, SRS transmission on a symbol other than the at least one second symbol in at least one consecutive symbol corresponding to a second time period corresponding to the indication information is actively dropped. It means that SRS transmission on all remaining symbols in the SRS resource after the first time period corresponding to the indication information is actively dropped. In other words, for other indication information that corresponds to the SRS resource and that is received after the indication information, the terminal device may no longer repeat the method 400, saving resources used for SRS transmission, and avoiding a waste of SRS resources caused by transmission of an invalid SRS.

As described above, the foregoing embodiment can be applied to a scenario in which phase continuity between two segments of symbols before and after an intermediate symbol in an SRS resource cannot be ensured due to transmission interruption on the intermediate symbol. It should be understood that the foregoing embodiment can also be applied to another scenario, for example, a scenario in which phase continuity between two segments of symbols before and after an intermediate symbol in an SRS resource can be ensured with transmission interruption on the intermediate symbol. This is not specifically limited in this application.

The following describes a method 600 in which SRS transmission on more symbols can be reserved because SRSs sent on inconsecutive symbols in an SRS resource can also be jointly used by a network device for uplink channel measurement in a scenario in which phase continuity between two segments of symbols before and after an intermediate symbol can be ensured with transmission interruption on the intermediate symbol in the SRS resource, as shown in FIG. 6.

In this embodiment, an example in which a terminal device and a network device are used as execution bodies of interaction illustration is used to illustrate the method. However, the execution bodies of the interaction illustration are not limited in this application. For example, the network device in FIG. 6 may alternatively be a chip, a chip system, or a processor that supports the network device in implementing the method, or may be a logical module or software that can implement all or a part of functions of the network device. The terminal device in FIG. 6 may alternatively be a chip, a chip system, or a processor that supports the terminal device in implementing the method, or may be a logical module or software that can implement all or a part of functions of the terminal device.

In this embodiment, a sounding reference signal SRS is used as an example to describe the technical solutions in embodiments of this application. The technical solutions of this application may be further used in a scenario of transmitting another reference signal for channel measurement.

Step S610: A network device sends multiple pieces of indication information to a terminal device. Correspondingly, the terminal device receives the multiple pieces of indication information from the network device.

Specifically, the multiple pieces of indication information indicates that SRS sending on multiple symbols in a same SRS resource is dropped. The SRS resource may be a resource to be used by the network device for SRS sending, or a resource being used for SRS sending. The SRS resource may correspond to one time unit in time domain, and the time unit includes multiple consecutive symbols. For a reason why sending or receiving of the SRS on the multiple symbols is dropped, refer to the reason why sending or receiving of the SRS on the first symbol is dropped in step S410. Details are not described herein again.

It should be understood that the terminal device may receive the multiple pieces of indication information from the network device at different moments. Therefore, the terminal device may parse the multiple pieces of indication information at different moments. In other words, the multiple pieces of indication information are in time sequence.

Specifically, the multiple pieces of indication information may include first indication information and at least one piece of second indication information. The first indication information is the last indication information in the multiple pieces of indication information in time sequence. In other words, the first indication information is the latest indication information received by the terminal device in the multiple pieces of indication information. The at least one piece of second indication information is all indication information in the multiple pieces of indication information other than the first indication information, that is, indication information received by the terminal device earlier than the first indication information in time sequence.

The first indication information indicates that SRS sending on a sixth symbol in the SRS resource is dropped, and the at least one piece of second indication information indicates that SRS sending on at least one seventh symbol in the SRS resource is dropped.

Step S620: The terminal device sends the SRS to the network device on at least one fourth symbol and at least one fifth symbol. Correspondingly, the network device receives the SRS from the terminal device on the at least one fourth symbol and the at least one fifth symbol.

The at least one fourth symbol is a symbol in at least one consecutive symbol that is in the SRS resource and that corresponds to a third time period. The third time period is a time period between a third moment and a fourth moment, the third moment is a moment at which the first indication information is parsed by the terminal device, and the fourth moment is a moment corresponding to a start location of the sixth symbol. In other words, the third time period is a time period from determining by the terminal device that SRS sending on the sixth symbol is dropped to starting transmission of a transmission object on the sixth symbol. One symbol or multiple consecutive symbols in the SRS resource correspond to the third time period, and the at least one fourth symbol is a symbol in the one symbol or multiple consecutive symbols.

The at least one fifth symbol is all symbols that are in the SRS resource other than the at least one seventh symbol and that correspond to a fourth time period. The fourth time period is a time period between a start moment of the SRS resource and a third moment, the third moment is a moment at which the first indication information is parsed by the terminal device, and the start moment of the SRS resource is a start moment of the 1st symbol in the SRS resource. In other words, the at least one fifth symbol is all symbols, in a time period from the start of the SRS resource to determining by the terminal device that SRS sending on the sixth symbol is dropped, on which SRS sending is not dropped upon indication by the indication information.

In addition, antenna ports that are for SRS sending and that correspond to the at least one fourth symbol and the at least one fifth symbol include all antenna ports of the terminal device.

It should be understood that, that antenna ports that are for sending the SRS and that correspond to the at least one fourth symbol and the at least one fifth symbol include all antenna ports of the terminal device means that an antenna port that is for sending the SRS and that corresponds to the at least one fourth symbol and an antenna port that is for sending the SRS and that corresponds to the at least one fifth symbol jointly include all the antenna ports of the terminal device. Because the third moment may be in the time unit corresponding to the SRS resource, when the terminal device determines that SRS sending on the sixth symbol is dropped, an SRS may have been sent on a part of symbols (namely, the at least one fifth symbol) in the SRS resource. Because the at least one fifth symbol has already corresponded to at least a part of all the antenna ports of the terminal device, when phase continuity between the at least one fifth symbol and the at least one fourth symbol can be ensured, the at least one fourth symbol needs to correspond to only a remaining port of all the antenna ports of the terminal device.

According to the method 600, when transmission interruption on an intermediate symbol does not affect phase continuity, the terminal device can reserve as many as possible the at least one fifth symbol on the SRS resource before the moment at which the latest received first indication information is parsed, and determine the at least one fourth symbol from the resource corresponding to the third time period corresponding to the first indication information, so that the network device can measure an uplink channel based on the SRS sent by the terminal device on the at least one fourth symbol and the at least one fifth symbol, increasing a quantity of SRSs that can be used for uplink channel measurement, improving accuracy of uplink channel acquisition, and ensuring uplink transmission performance

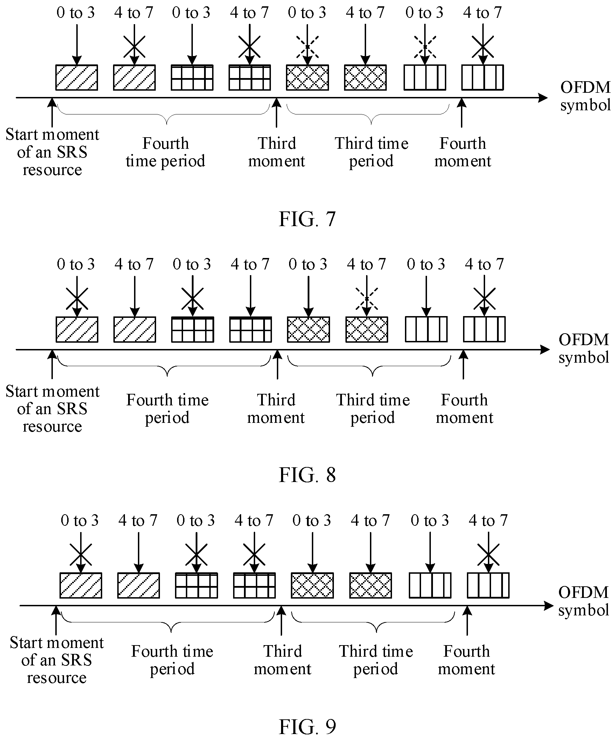

For example, all the antenna ports of the terminal device are eight antenna ports, which are numbered 0, 1, 2, 3, 4, 5, 6, and 7 respectively. OFDM symbols on the SRS resource include two types of symbols. A first-type symbol corresponds to the antenna ports 0 to 3 of the terminal device, and a second-type symbol corresponds to the antenna ports 4 to 7 of the terminal device. As shown in FIG. 7, the third moment is a moment at which the first indication information is parsed by the terminal device, and is located between the 4th OFDM symbol and the 5th OFDM symbol. The start moment of the SRS resource is a start moment of the 1st OFDM symbol, and the fourth time period between the start moment of the SRS resource and the third moment corresponds to the 1st OFDM symbol, the 2nd OFDM symbol, the 3rd OFDM symbol, and the 4th OFDM symbol. SRS transmission on the 2nd OFDM symbol and the 4th OFDM symbol is dropped upon indication of at least one piece of second indication information that is earlier than the first indication information in time sequence. In this case, the terminal device reserves SRS transmission on the 1st OFDM symbol and the 3rd OFDM symbol. In other words, the 2nd OFDM symbol and the 4th OFDM symbol are the at least one seventh symbol, and the 1st OFDM symbol and the 3rd OFDM symbol are the at least one fifth symbol.

The first indication information indicates that SRS transmission on the 8th OFDM symbol is dropped, the fourth moment is a start moment of the 8th OFDM symbol, the third time period between the third moment and the fourth moment corresponds to three consecutive symbols, that is, the 5th OFDM symbol, the 6th OFDM symbol, and the 7th OFDM symbol, and the terminal device determines the at least one fourth symbol from the three consecutive symbols. Because the 1st OFDM symbol and the 3rd OFDM symbol correspond to the antenna ports 0 to 3 of the terminal device, the at least one fourth symbol may include only a symbol corresponding to the antenna ports 4 to 7 of the terminal device. For example, the at least one fourth symbol may be the 6th OFDM symbol.

It should be understood that, in the example shown in FIG. 7, the at least one fourth symbol may alternatively be a symbol corresponding to the antenna ports 0 to 3 of the terminal device. For example, the at least one fourth symbol may be the 5th OFDM symbol, the 6th OFDM symbol, and the 7th OFDM symbol, or any multiple symbols including the 6th OFDM symbol. All combinations are not enumerated herein.

Optionally, a quantity of times the SRS is sent on the at least one fourth symbol is the same as a quantity of times the SRS is sent on the at least one fifth symbol over all the antenna ports of the terminal device, or in other words, a quantity of times the at least one fourth symbol corresponds to each antenna port is the same as a quantity of times the at least one fifth symbol corresponds to each antenna port.

It should be understood that, that a quantity of times the SRS is sent on the at least one fourth symbol is the same as a quantity of time the SRS is sent on the at least one fifth symbol over all the antenna ports of the terminal device means that a sum of quantities of times the SRS is sent on the at least one fourth symbol is the same as a sum of quantities of times the SRS is sent on the at least one fifth symbol over each of all the antenna ports of terminal device. In other words, a sum of quantities of times the at least one fourth symbol corresponds to each antenna port is the same as a sum of quantities of times the at least one fifth symbol corresponds to each antenna port.

For example, as shown in FIG. 8, the at least one fifth symbol is the 2nd OFDM symbol and the 4th OFDM symbol. In this case, the terminal device has sent the SRS twice over the antenna ports 4 to 7, but has not sent the SRS over the antenna ports 0 to 3. Therefore, to finally send the SRS by the terminal device over each antenna port a same quantity of times, a quantity of symbols, in the at least one fourth symbol, corresponding to the antenna ports 0 to 3 should be two more than a quantity of symbols corresponding to the antenna ports 4 to 7. For example, the at least one fourth symbol may be the 5th OFDM symbol and the 7th OFDM symbol. In this case, the at least one fourth symbol includes two symbols corresponding to the antenna ports 0 to 3, and the at least one fifth symbol includes two symbols corresponding to the antenna ports 4 to 7. To be specific, on the at least one fourth symbol and the at least one fifth symbol, the terminal device sends the SRS twice over the antenna ports 0 to 3 and sends the SRS twice over the antenna ports 4 to 7, so that each antenna port is measured a same quantity of times, ensuring accuracy of uplink channel measurement corresponding to each antenna port of the terminal device, and ensuring uplink transmission performance.

It should be understood that, because a quantity of symbols corresponding to the third time period is limited, quantities of different types of symbols that are in the at least one fourth symbol and that correspond to different antenna ports of the terminal device may not meet the foregoing requirement. In this case, when determining the at least one fourth symbol, the terminal device reduces, as much as possible, a difference between a quantity of times the SRS is sent on the at least one fourth symbol and a quantity of times the SRS is sent on the at least one fifth symbol over all the antenna ports of the terminal device.

For example, as shown in FIG. 7, the at least one fifth symbol is the 1st OFDM symbol and the 3rd OFDM symbol. In this case, the terminal device has sent the SRS twice over the antenna ports 0 to 3, but has not sent the SRS over the antenna ports 4 to 7. In the at least one fourth symbol, a quantity of symbols corresponding to the antenna ports 4 to 7 should ideally be two more than a quantity of symbols corresponding to the antenna ports 0 to 3. However, in the 5th OFDM symbol, the 6th OFDM symbol, and the 7th OFDM symbol, at most one symbol, that is the 6th OFDM symbol, corresponds to the antenna ports 4 to 7. In this case, the terminal device reserves as many as possible symbols corresponding to the antenna ports 4 to 7, and drops as much as possible SRS sending on symbols corresponding to the antenna ports 0 to 3. Therefore, the finally determined at least one fourth symbol is the 6th OFDM symbol.

As described above, there may be multiple results of determining the at least one fourth symbol meeting a condition from the at least one symbol that is in the SRS resource and that corresponds to the third time period. For this case, this application provides two implementations, to determine one result from multiple results.

In a first implementation, the at least one consecutive symbol that corresponds to the third time period includes at least one symbol set, each of the at least one symbol set includes one symbol or multiple consecutive symbols, and the at least one fourth symbol is a symbol set having a largest quantity of symbols in the at least one symbol set.

It should be understood that the at least one consecutive symbol that corresponds to the third time period may be considered as a second symbol set, and each symbol is an element in the symbol set. The at least one symbol set may be a subset of the second symbol set including the second symbol set. In other words, there is at least one pattern for randomly selecting one element or multiple elements from the second symbol set, and a result of each pattern corresponds to the at least one symbol set.

For example, as shown in FIG. 9, the at least one fifth symbol is the 2nd OFDM symbol. It is assumed that the condition the at least one fourth symbol meets is that antenna ports that are for sending the SRS and that correspond to the at least one fourth symbol and the at least one fifth symbol include all the antenna ports of the terminal device, and a quantity of times the SRS is sent on the at least one fourth symbol is the same as a quantity of times the SRS is sent on the at least one fifth symbol over all the antenna ports of the terminal device. In this case, the at least one symbol set corresponding to the multiple results may include {the 5th OFDM symbol}, {the 7th OFDM symbol}, {the 5th OFDM symbol, the 6th OFDM symbol, the 7th OFDM symbol}. The symbol set having a largest quantity of symbols is {the 5th OFDM symbol, the 6th OFDM symbol, the 7th OFDM symbol} that include three symbols.

In the foregoing manner, a quantity of the at least one fourth symbol for sending the SRS is as large as possible, so that the terminal device maintains an advantage of SRS repetition as much as possible, improving a signal-to-noise ratio of receiving the SRS by the network device, improving accuracy of uplink channel measurement, and ensuring uplink transmission performance.

In a second implementation, the at least one fourth symbol includes S types of symbols, and S is a positive integer. An end moment of each type of symbol of the at least one fourth symbol is later than an end moment of a same type of symbol in at least one eighth symbol, and the at least one eighth symbol is all symbols in the at least one consecutive symbol that is in the SRS resource other than the at least one fourth symbol and that corresponds to the third time period.

It should be understood that each type of symbol of the S types of symbols corresponds to a different antenna port for sending the SRS, and symbols of a same type mean symbols that correspond to a same port for SRS sending. In other words, each of the at least one fourth symbol is several symbols having latest end moments in symbols that are of a same type and that correspond to the third time period.

For example, in the case shown in FIG. 8, it is assumed that the condition the at least one fourth symbol meets is that antenna ports that are for sending the SRS and that correspond to the at least one fourth symbol and the at least one fifth symbol include all the antenna ports of the terminal device, and a quantity of times the SRS is sent on the at least one fourth symbol is the same as a quantity of times the SRS is sent on the at least one fifth symbol over all the antenna ports of the terminal device. OFDM symbols on the SRS resource include two types of symbols. A first-type symbol corresponds to the antenna ports 0 to 3 of the terminal device, and a second-type symbol corresponds to the antenna ports 4 to 7 of the terminal device. The at least one fourth symbol {the 5th OFDM symbol, the 7th OFDM symbol} finally determined by the terminal device includes two first-type symbols corresponding to the antenna ports 0 to 3 of the terminal device, and the two first-type symbols are two first-type symbols having latest end moments in first-type symbols corresponding to the third time period Although an end moment of the 5th OFDM symbol is earlier than that of the 6th OFDM symbol, because the 6th OFDM symbol is a second-type symbol corresponding to the antenna ports 4 to 7 of the terminal device, and is of a type different from that of the 5th OFDM symbol, a timing relationship between the 5th OFDM symbol and the 6th OFDM symbol does not need to be considered when the at least one fourth symbol is determined in this embodiment of this application.

In the foregoing manner, time of the at least one fourth symbol for sending the SRS is as close as possible to time of performing uplink scheduling by the network device, so that the network device performs uplink channel measurement based on a latest SRS of the terminal device as much as possible, improving accuracy of uplink channel measurement and ensuring uplink transmission performance.

The foregoing two implementations may be used separately or jointly. This is not limited in this application.

In addition, after determining the at least one fourth symbol, the terminal device drops SRS sending on a symbol corresponding to the third time period other than the at least one fourth symbol. In other words, the terminal device sends the SRS to the network device only on the at least one fourth symbol in the third time period.

The method 400, the method 600, and the related embodiments describe that the terminal device determines a symbol for SRS transmission in an SRS resource, and actively drops SRS transmission on another symbol in the SRS resource, to avoid a scenario in which an invalid SRS is transmitted. If there is no invalid SRS in SRSs transmitted by the terminal device to the network device, the network device may directly associate uplink scheduling with an SRS resource that is closest to the uplink scheduling and on which an SRS is received, perform channel measurement based on the SRS received on the SRS resource, and perform PUSCH scheduling based on a measurement result.

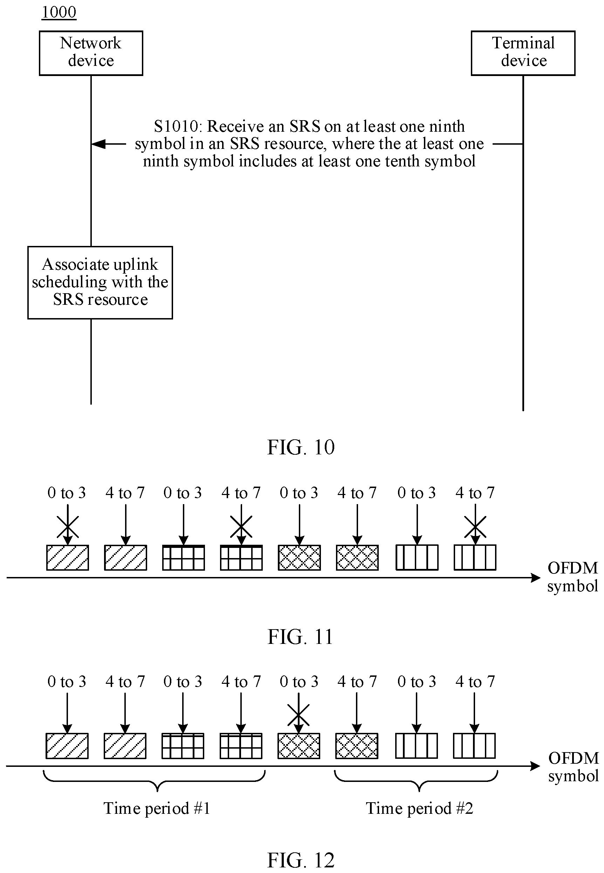

However, in a scenario in which there is an invalid SRS in SRSs transmitted by the terminal device to the network device, for example, the terminal device drops (dropping) only SRS transmission on a symbol indicated by indication information, but does not actively cancel (cancel) SRS transmission on another symbol, or as described in the first processing manner of the method 400, the terminal device sends multiple SRSs with discontinuous phases to the network device on multiple segments of consecutive symbols in a same SRS resource, in this case, the terminal device needs to determine, from the symbols on which the SRS is received in the SRS resource, all or a part of symbols to be associated with uplink scheduling. The following describes a method 1000 for a network device to determine an SRS resource associated with uplink scheduling, as shown in FIG. 10.

In this embodiment, an example in which a terminal device and a network device are used as execution bodies of interaction illustration is used to illustrate the method. However, the execution bodies of the interaction illustration are not limited in this application. For example, the network device in FIG. 10 may alternatively be a chip, a chip system, or a processor that supports the network device in implementing the method, or may be a logical module or software that can implement all or a part of functions of the network device. The terminal device in FIG. 10 may alternatively be a chip, a chip system, or a processor that supports the terminal device in implementing the method, or may be a logical module or software that can implement all or a part of functions of the terminal device.

In this embodiment, a sounding reference signal SRS is used as an example to describe the technical solutions in embodiments of this application. The technical solutions of this application may be further used in a scenario of transmitting another reference signal for channel measurement.

Step S1010: A network device receives an SRS from a terminal device on at least one ninth symbol in an SRS resource. Correspondingly, the terminal device sends the SRS to the network device on the at least one ninth symbol in the SRS resource.

Specifically, the network device receives, on the SRS resource, the SRS sent by the terminal device, where the at least one ninth symbol is a symbol on which SRS sending is not dropped by the terminal device in the SRS resource. SRS sending on a symbol in the SRS resource other than the at least one ninth symbol may be dropped (dropping) by the terminal device upon indication, or may be actively canceled (cancel) by the terminal device. For a reason why sending or receiving of the SRS on the symbol in the SRS resource other than the at least one ninth symbol is dropped, refer to the reason why sending or receiving of the SRS on the first symbol is dropped in step S410. Details are not described herein again.

Specifically, the SRS resource may be a resource used by the network device to receive a latest SRS sent by the terminal device. The SRS resource may correspond to one time unit in time domain, and the time unit includes multiple consecutive symbols.

Step S1020: The network device associates uplink scheduling with the SRS resource.

Specifically, when the SRS resource includes at least one tenth symbol, the network device associates the uplink scheduling with the SRS resource. The at least one tenth symbol is a symbol in the at least one ninth symbol. In addition, an antenna port corresponding to the at least one tenth symbol includes all antenna ports of the terminal device, or an antenna port corresponding to the at least one tenth symbol includes all antenna ports related to the uplink scheduling. In other words, if symbols, in an SRS resource, on which an SRS is received include at least one tenth symbol whose corresponding antenna port meets a specific condition, uplink scheduling is associated with the SRS resource. It means that the network device performs channel measurement based on the SRS received on the at least one tenth symbol, and performs PUSCH scheduling based on a measurement result.

It should be understood that the foregoing "all antenna ports of the terminal device" may be all antenna ports used by the terminal device for sending the SRS, and all the antenna ports used by the terminal device for sending the SRS may be configured by the network device.

It should be understood that an antenna port related to the uplink scheduling is an antenna port used by the network device to schedule PUSCH transmission of the terminal device, and all the antenna ports related to the uplink scheduling may be all or a part of the antenna ports of the terminal device. That an antenna port corresponding to the at least one tenth symbol includes all antenna ports related to the uplink scheduling means that the antenna port corresponding to the at least one tenth symbol includes at least all the antenna ports related to the uplink scheduling. Therefore, the antenna port corresponding to the at least one tenth symbol may include a part of the antenna ports of the terminal device, or may include all the antenna ports of the terminal device.

For example, all the antenna ports of the terminal device are eight antenna ports, which are numbered 0, 1, 2, 3, 4, 5, 6, and 7 respectively. OFDM symbols on the SRS resource include two types of symbols. A first-type symbol corresponds to the antenna ports 0 to 3 of the terminal device, and a second-type symbol corresponds to the antenna ports 4 to 7 of the terminal device. If the network device needs to schedule the terminal device to transmit the PUSCH over only the antenna ports 0 to 3 of the terminal device, the network device may perform channel measurement by using only the SRS sent by the terminal device over the antenna ports 0 to 3 of the terminal device. In this case, the "all antenna ports related to the uplink scheduling" may be the antenna ports 0 to 3 of the terminal device, and the at least one tenth symbol may include only the first-type symbol corresponding to the antenna ports 0 to 3 of the terminal device.

It should be understood that the uplink scheduling is scheduling performed by the network device on physical uplink shared channel (physical uplink control channel, PUSCH) transmission of the terminal device. Specifically, the network device performs channel measurement based on the received SRS, obtains uplink (uplink, UL) channel information of the terminal device, and schedules PUSCH transmission of the terminal device based on the UL channel information. Therefore, that the network device associates the uplink scheduling with the SRS resource means that the network device performs channel measurement based on the SRS received on the SRS resource.

Specifically, when an SRS resource includes at least one tenth symbol that meets a condition, the network device associates the uplink scheduling with the SRS resource, which means that the network device performs channel measurement based on the SRS received on the at least one tenth symbol.

The at least one tenth symbol may be all or a part of the at least one ninth symbol.

Optionally, when an SRS resource does not include at least one tenth symbol that meets the condition, the network device can associate the uplink scheduling with an SRS resource that is earlier in time sequence and that meets the condition.

According to the method 1000, when an SRS resource includes the at least one tenth symbol, the network device can associate uplink scheduling with the SRS resource, so that the network device can measure an uplink channel based on the SRS sent by the terminal device on the at least one tenth symbol, increasing a quantity of SRSs that can be used for uplink channel measurement, improving accuracy of uplink channel acquisition, and ensuring uplink transmission performance.

Optionally, when the antenna port corresponding to the at least one tenth symbol includes all the antenna ports of the terminal device, the SRS is sent on the at least one second symbol over all the antenna ports of the terminal device a same quantity of times, or in other words, the at least one second symbol corresponds to each antenna port a same quantity of times.

Alternatively, when the antenna port corresponding to the at least one tenth symbol includes all the antenna ports related to the uplink scheduling, the SRS is sent on the at least one second symbol over all the antenna ports related to the uplink scheduling a same quantity of times, or in other words, the at least one second symbol corresponds to each antenna port related to the uplink scheduling a same quantity of times.

In the foregoing manner, the network device can perform uplink channel measurement on each antenna port a same quantity of times, ensuring accuracy of uplink channel measurement corresponding to each antenna port, and ensuring uplink transmission performance.

As described above, when the terminal device sends the SRS to the network device, SRS transmission on a part of symbols may be dropped. Therefore, SRS transmission may be interrupted on the at least one ninth symbol. In this case, this embodiment of this application provides two different processing manners for two different cases in which transmission interruption on an intermediate symbol may affect phase continuity and transmission interruption on an intermediate symbol may not affect phase continuity.

In a first processing manner, when transmission interruption on an intermediate symbol does not affect phase continuity, the at least one tenth symbol may be all or a part of the at least one ninth symbol. In this case, this application provides two implementations.

In a first implementation, the at least one ninth symbol includes at least one symbol set, each of the at least one symbol set includes one symbol or multiple symbols, and the at least one tenth symbol is a symbol set having a largest quantity of symbols in the at least one symbol set.

It should be understood that all of the at least one ninth symbol may be considered as a third symbol set, and each symbol is an element in the symbol set. The at least one symbol set may be a subset of the third symbol set including the third symbol set. In other words, there is at least one pattern for randomly selecting one element or multiple elements from the third symbol set, and a result of each pattern corresponds to the at least one symbol set.

For example, as shown in FIG. 11, the at least one ninth symbol is the 2nd OFDM symbol, the 3rd OFDM symbol, the 5th OFDM symbol, the 6th OFDM symbol, and the 7th OFDM symbol. In other words, the network device receives the SRS on the 2nd OFDM symbol, the 3rd OFDM symbol, the 5th OFDM symbol, the 6th OFDM symbol, and the 7th OFDM symbol in the SRS resource. In the range of the at least one ninth symbol, the network device may determine, as the at least one tenth symbol, the symbol set {the 2nd OFDM symbol, the 3rd OFDM symbol, the 5th OFDM symbol, the 6th OFDM symbol, the 7th OFDM symbol} that includes all the five symbols and that has a largest quantity of symbols, to perform uplink channel measurement based on the SRS received on the at least one tenth symbol.

It is assumed that a condition the at least one tenth symbol meets further includes that the antenna port corresponding to the at least one tenth symbol includes all the antenna ports of the terminal device. In this case, the network device may determine, as the at least one tenth symbol, the symbol set {the 2nd OFDM symbol, the 5th OFDM symbol, the 6th OFDM symbol, the 7th OFDM symbol}, {the 2nd OFDM symbol, the 3rd OFDM symbol, the 6th OFDM symbol, the 7th OFDM symbol}, or {the 2nd OFDM symbol, the 3rd OFDM symbol, the 5th OFDM symbol, the 6th OFDM symbol} that includes four symbols and that has a largest quantity of symbols.

In the foregoing manner, a quantity of the at least one tenth symbol associated with the uplink scheduling is as large as possible, so that the SRS used by the network device for channel measurement is repeated as many times as possible, improving a signal-to-noise ratio of the SRS used by the network device for channel measurement, improving accuracy of uplink channel measurement, and ensuring uplink transmission performance.

In a second implementation, the at least one tenth symbol includes S types of symbols, S is a positive integer, an end moment of each type of symbol of the at least one tenth symbol is later than an end moment of a same type of symbol in at least one eleventh symbol, and the at least one eleventh symbol is all symbols in the at least one ninth symbol other than the at least one tenth symbol.

It should be understood that each type of symbol of the S types of symbols corresponds to a different antenna port for sending the SRS, and symbols of a same type mean symbols that correspond to a same port for SRS sending. In other words, each of the at least one tenth symbol is several symbols having latest end moments in symbols of a same type in the at least one ninth symbol.

For example, in the case shown in FIG. 11, it is assumed that the condition the at least one tenth symbol meets is that the antenna port corresponding to the at least one tenth symbol includes all the antenna ports of the terminal device, and the SRS is sent on the at least one tenth symbol over all the antenna ports of the terminal device a same quantity of times. In this case, the network device may determine the symbol set {the 6th OFDM symbol, the 7th OFDM symbol} or {the 2nd OFDM symbol, the 5th OFDM symbol, the 6th OFDM symbol, the 7th OFDM symbol} as the at least one tenth symbol.

In the foregoing manner, time of the at least one tenth symbol associated with the uplink scheduling is as close as possible to time of the uplink scheduling, so that the network device performs uplink channel measurement based on a latest SRS of the terminal device as much as possible, improving accuracy of uplink channel measurement and ensuring uplink transmission performance.

The foregoing two implementations may be used separately or jointly. This is not limited in this application.

For example, in the case shown in FIG. 11, it is assumed that the condition the at least one tenth symbol meets is that the antenna port corresponding to the at least one tenth symbol includes all the antenna ports of the terminal device, and the SRS is sent on the at least one tenth symbol over all the antenna ports of the terminal device a same quantity of times. By jointly using the foregoing two implementations, the network device can finally determine the symbol set {the 2nd OFDM symbol, the 5th OFDM symbol, the 6th OFDM symbol, the 7th OFDM symbol} as the at least one tenth symbol.

In a second processing manner, when transmission interruption on an intermediate symbol affects phase continuity, the at least one ninth symbol corresponds to N time periods on the SRS resource, each of the N time periods corresponds to one symbol or multiple consecutive symbols, the at least one tenth symbol is a symbol of a symbol corresponding to a fifth time period in the N time periods, and N is a positive integer.

Specifically, the fifth time period may be a time period having a largest quantity of symbols in the N time periods, and/or the fifth time period may be a time period having a latest end moment in the N time periods.

For example, as shown in FIG. 12, because SRS transmission on the 5th OFDM symbol is interrupted, the at least one ninth symbol may correspond to two time periods. A time period #1 corresponds to the 1st OFDM symbol, the 2nd OFDM symbol, the 3rd OFDM symbol, and the 4th OFDM symbol, and a time period #2 corresponds to the 6th OFDM symbol, the 7th OFDM symbol, and the 8th OFDM symbol. The network device may determine the at least one tenth symbol in the 1st OFDM symbol, the 2nd OFDM symbol, the 3rd OFDM symbol, and the 4th OFDM symbol that correspond to the time period #1 having a larger quantity of symbols, or determine the at least one tenth symbol in the 6th OFDM symbol, the 7th OFDM symbol, and the 8th OFDM symbol that correspond to the time period #2 having a later end moment.

In this case, this application also provides two implementations for determining the at least one tenth symbol from the symbol corresponding to the fifth time period.

In a first implementation, the symbol corresponding to the fifth time period includes at least one symbol set, each of the at least one symbol set includes one symbol or multiple consecutive symbols, and the at least one tenth symbol is a symbol set having a largest quantity of symbols in the at least one symbol set.

It should be understood that the symbol corresponding to the fifth time period may be considered as a fourth symbol set, and each symbol is an element in the symbol set. The at least one symbol set may be a subset of the fourth symbol set including the fourth symbol set. In other words, there is at least one pattern for randomly selecting one element or multiple consecutive elements from the fourth symbol set, and a result of each pattern corresponds to the at least one symbol set.

For example, in the case shown in FIG. 12, it is assumed that the fifth time period is the time period #2. In this case, the network device may determine, as the at least one tenth symbol, the symbol set {the 6th OFDM symbol, the 7th OFDM symbol, the 8th OFDM symbol} that includes all the three symbols and that has a largest quantity of symbols. If the at least one tenth symbol further needs to meet the condition that the antenna port corresponding to the at least one tenth symbol includes all the antenna ports of the terminal device, the network device may determine, as the at least one tenth symbol, the symbol set {the 6th OFDM symbol, the 7th OFDM symbol} or {the 7th OFDM symbol, the 8th OFDM symbol} that includes two symbols.

In the foregoing manner, a quantity of the at least one tenth symbol in the fifth time period is as large as possible, so that the SRS used by the network device for channel measurement is repeated as many times as possible, improving a signal-to-noise ratio of the SRS used by the network device for channel measurement, improving accuracy of uplink channel measurement, and ensuring uplink transmission performance.

In a second implementation, the symbol corresponding to the fifth time period includes at least one symbol set, each of the at least one symbol set includes one symbol or multiple consecutive symbols, and the at least one tenth symbol is a symbol set having a latest end moment in the at least one symbol set.

For example, in the case shown in FIG. 12, it is assumed that the fifth time period is the time period #2. In this case, the network device may determine, as the at least one tenth symbol, the symbol set {the 7th OFDM symbol, the 8th OFDM symbol} or {the 6th OFDM symbol, the 7th OFDM symbol, the 8th OFDM symbol} that includes all the three symbols and that has a largest quantity of symbols. If the at least one tenth symbol further needs to meet the condition that the antenna port corresponding to the at least one tenth symbol includes all the antenna ports of the terminal device, the network device may determine the symbol set {the 7th OFDM symbol, the 8th OFDM symbol} as the at least one tenth symbol.

In the foregoing manner, time of the at least one tenth symbol in the fifth time period is as close as possible to time of the uplink scheduling, so that the network device performs uplink channel measurement based on a latest SRS of the terminal device as much as possible, improving accuracy of uplink channel measurement and ensuring uplink transmission performance.

The foregoing two implementations may be used separately or jointly. This is not limited in this application.

For example, in the case shown in FIG. 12, it is assumed that the fifth time period is the time period #2, and the condition the at least one tenth symbol meets is that the antenna port corresponding to the at least one tenth symbol includes all the antenna ports of the terminal device, and the SRS is sent on the at least one tenth symbol over all the antenna ports of the terminal device a same quantity of times. By jointly using the foregoing two implementations, the network device can finally determine the symbol set {the 7th OFDM symbol, the 8th OFDM symbol} as the at least one tenth symbol.

It should be understood that the method 400 or the method 600 for determining a symbol for SRS transmission in an SRS resource according to embodiments of this application can be independently performed. The method 1000 for determining an SRS resource associated with uplink scheduling can also be independently performed. Alternatively, the method 400 or the method 600 can be jointly performed with the method 1000. This is not specifically limited in this application.

For example, a scenario in which the method 400 and the method 1000 are jointly performed may be a scenario described in the first processing manner in the foregoing method 400. In this case, the terminal device may determine, according to the method 400, multiple segments of consecutive symbols in an SRS resource to transmit an SRS to the network device, and the multiple segments of consecutive symbols are inconsecutive to each other. After receiving the SRS on the multiple segments of consecutive symbols in the SRS resource, the network device may determine a segment of consecutive symbols in the multiple segments of consecutive symbols according to the method 1000, and perform uplink channel measurement based on the SRS received on the segment of consecutive symbols.

In another example, a scenario in which the method 600 and the method 1000 are jointly performed may be a scenario in which a limited quantity of at least one fourth symbol in symbols corresponding to a third time period described in the foregoing method 600 causes failure to meet a requirement that the SRS is sent on each antenna port a same quantity of times. In this case, the terminal device may determine, according to the method 600, at least one fourth symbol and at least one fifth symbol in an SRS resource to transmit an SRS to the network device. After receiving the SRS on the at least one fourth symbol and the at least one fifth symbol in the SRS resource, the network device may determine the at least one tenth symbol from the at least one fourth symbol and the at least one fifth symbol according to the method 1000, so that the SRS is sent on the at least one tenth symbol on each antenna port a same quantity of times, and uplink channel measurement is performed based on the SRS received on the at least one tenth symbol.

Finally, apparatus embodiments in embodiments of this application are described.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

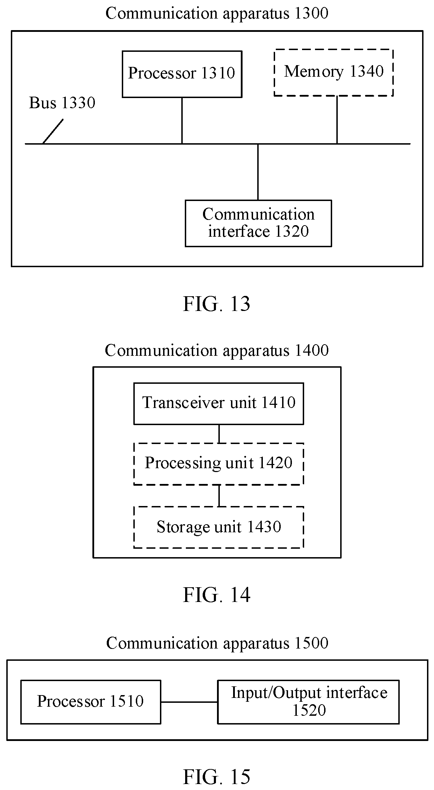

FIG. 13 is a block diagram of a communication apparatus 1300 according to an embodiment of this application. The communication apparatus 1300 includes a processor 1310 and a communication interface 1320. The processor 1310 and the communication interface 1320 may be connected to each other through a bus 1330. The communication apparatus 1300 may be a terminal device or may be a network device.

Optionally, the communication apparatus 1300 may further include a memory 1340. The memory 1340 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1340 is configured to store related instructions and data.

The processor 1310 may be one or more central processing units (central processing unit, CPU). When the processor 1310 is one CPU, the CPU may be a single-core CPU, or may be a multi-core CPU.

When the communication apparatus 1300 is a terminal device, in an example, the communication apparatus 1300 is configured to perform the following operation: sending an SRS to a network device, and the like.

When the communication apparatus 1300 is a network device, in an example, the communication apparatus 1300 is configured to perform the following operation: receiving an SRS from a terminal device, and the like.

The content is merely used as an example for description. When the communication apparatus 1300 is a terminal device/a network device, the communication apparatus 1300 is responsible for performing the methods or steps related to the terminal device/the network device in the foregoing method embodiments.

The foregoing descriptions are merely examples for description. For specific content, refer to the content shown in the method embodiments. For implementation of each operation in FIG. 13, refer to corresponding descriptions of the method embodiments shown in FIG. 4 to FIG. 12.

FIG. 14 is a block diagram of a communication apparatus 1400 according to an embodiment of this application. The communication apparatus 1400 may be a terminal device or a network device, or may be a chip or a module in the terminal device or the network device, and is configured to implement the method in the foregoing embodiments. The communication apparatus 1400 includes a transceiver unit 1410. Optionally, the communication apparatus 1400 further includes a processing unit 1420. The following describes the transceiver unit 1410 and the processing unit 1420 by using examples.

The transceiver unit 1410 may include a sending unit and a receiving unit. The sending unit is configured to perform a sending action of the communication apparatus 1400, and the receiving unit is configured to perform a receiving action of the communication apparatus 1400. For ease of description, in this embodiment of this application, the sending unit and the receiving unit are combined into one transceiver unit. A unified description is provided herein, and details are not described below again.

When the communication apparatus 1400 is a terminal device, in an example, the transceiver unit 1410 is configured to receive indication information, and send an SRS on at least one second symbol; or the transceiver unit 1410 is configured to receive multiple pieces of indication information, and send an SRS on at least one fourth symbol and at least one fifth symbol.

When the communication apparatus 1400 is a network device, in an example, the transceiver unit 1410 is configured to receive an SRS on at least one ninth symbol in an SRS resource, and the processing unit 1420 is configured to associate uplink scheduling with the SRS resource.

The content is merely used as an example for description. When the communication apparatus 1400 is a terminal device or a network device, the communication apparatus 1400 is responsible for performing the methods or steps related to the terminal device or the network device in the foregoing method embodiments.

Optionally, the communication apparatus 1400 further includes a storage unit 1430. The storage unit 1430 is configured to store a program or code used to perform the foregoing methods.

The apparatus embodiments shown in FIG. 13 and FIG. 14 are used to implement the content described in FIG. 4 to FIG. 12. For specific execution steps and methods of the apparatuses shown in FIG. 13 and FIG. 14, refer to the content described in the foregoing method embodiments.

FIG. 15 is a block diagram of a communication apparatus 1500 according to an embodiment of this application. The communication apparatus 1500 is configured to implement a function of a terminal device/a network device. The communication apparatus 1500 may be a chip in the terminal device/the network device.

The communication apparatus 1500 includes an input/output interface 1520 and a processor 1510. The input/output interface 1520 may be an input/output circuit. The processor 1510 may be a signal processor, a chip, or another integrated circuit that can implement the methods in this application. The input/output interface 1520 is configured to input or output a signal or data.

In an example, when the communication apparatus 1500 is a terminal device, the input/output interface 1520 is configured to receive indication information, and send an SRS on at least one second symbol; or the input/output interface 1520 is configured to receive multiple pieces of indication information, and send an SRS on at least one fourth symbol and at least one fifth symbol.

In an example, when the communication apparatus 1500 is a network device, the input/output interface 1520 is configured to receive an SRS on at least one ninth symbol in an SRS resource. The processor 1510 is configured to associate uplink scheduling with the SRS resource.

In a possible implementation, the processor 1510 executes instructions stored in a memory, to implement the function implemented by the terminal device or the network device.

Optionally, the communication apparatus 1500 further includes a memory.

Optionally, the processor and the memory are integrated together.

Optionally, the memory is outside the communication apparatus 1500.

In a possible implementation, the processor 1510 may be a logic circuit, and the processor 1510 inputs/outputs a message or signaling through the input/output interface 1520. The logic circuit may be a signal processor, a chip, or another integrated circuit that can implement the method in embodiments of this application.

The foregoing description of the communication apparatus 1500 is merely an example for description. The communication apparatus 1500 can be configured to perform the methods in the foregoing embodiments. For specific content, refer to the descriptions in the foregoing method embodiments. Details are not described herein again.

This application further provides a chip. The chip includes a processor, configured to invoke instructions from a memory and run the instructions stored in the memory, to cause a communication device on which the chip is installed to perform the methods in the foregoing examples.

This application further provides a chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes a memory. The memory is configured to store a computer program or code.

This application further provides a processor. The processor is configured to couple to a memory, and configured to perform the methods and the functions of the network device or the terminal device in any one of the foregoing embodiments.

This application provides a computer program product including instructions. When the computer program product runs on a computer, the method in the foregoing embodiments is implemented.

This application further provides a computer program. When the computer program is run on a computer, the method in the foregoing embodiments is implemented.

This application further provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatus, and method may be implemented in another manner. For example, the described apparatus embodiments are merely examples. For example, division into the units is merely logical function division and may be other division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate parts may or may not be physically separate, and parts displayed as units may or may not be physical units, in other words, may be located in one position, or may be distributed on multiple network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving indication information, wherein the indication information indicates that SRS sending on a first symbol in an SRS resource is dropped; and
   sending the SRS on at least one second symbol, wherein the at least one second symbol is a symbol in at least one consecutive symbol that is in the SRS resource and that corresponds to a first time period, the first time period is a time period between a first moment and a second moment, the first moment is a moment at which the indication information is parsed by a terminal device, the second moment is a moment corresponding to a start location of the first symbol, and an antenna port that is for sending the SRS and that corresponds to the at least one second symbol comprises all antenna ports of the terminal device.

2. The method according to claim 1, wherein the SRS is sent on the at least one second symbol over all the antenna ports of the terminal device a same quantity of times.

3. The method according to claim 1 or 2, wherein the at least one consecutive symbol that is in the SRS resource and that corresponds to the first time period comprises at least one symbol set, each of the at least one symbol set comprises one symbol or multiple consecutive symbols, and the at least one second symbol is a symbol set having a largest quantity of symbols in the at least one symbol set.

4. The method according to any one of claims 1 to 3, wherein the at least one consecutive symbol that is in the SRS resource and that corresponds to the first time period comprises at least one symbol set, each of the at least one symbol set comprises one symbol or multiple consecutive symbols, and the at least one second symbol is a symbol set having a latest end moment in the at least one symbol set.

5. The method according to any one of claims 1 to 4, wherein the method further comprises:
   dropping sending the SRS on a third symbol, wherein the third symbol is all symbols that are in the SRS resource other than the first symbol and the at least one second symbol and that correspond to a second time period, and the second time period is a time period between the first moment and an end moment of the SRS resource.

6. A communication method, comprising:

   receiving multiple pieces of indication information, wherein the multiple pieces of indication information indicate that SRS sending on multiple symbols in an SRS resource is dropped; and
   sending the SRS on at least one fourth symbol and at least one fifth symbol, wherein the at least one fourth symbol is a symbol in at least one consecutive symbol that is in the SRS resource and that corresponds to a third time period, the third time period is a time period between a third moment and a fourth moment, the third moment is a moment at which first indication information is parsed by a terminal device, the fourth moment is a moment corresponding to a start location of a sixth symbol, the first indication information is latest received indication information in the multiple pieces of indication information, the sixth symbol is a symbol on which SRS sending is dropped as indicated by the first indication information, the at least one fifth symbol is all symbols that are in the SRS resource other than at least one seventh symbol and that correspond to a fourth time period, the fourth time period is a time period between a start moment of the SRS resource and the third moment, and the at least one seventh symbol is a symbol on which SRS sending is dropped as indicated by at least one piece of second indication information, the at least one piece of second indication information is all indication information in the multiple pieces of indication information other than the first indication information, and antenna ports that are for sending the SRS and that correspond to the at least one fourth symbol and the at least one fifth symbol comprise all antenna ports of the terminal device.

7. The method according to claim 6, wherein a quantity of times the SRS is sent on the at least one fourth symbol is the same as a quantity of times the SRS is sent on the at least one fifth symbol over all the antenna ports of the terminal device.

8. The method according to claim 6 or 7, wherein the at least one consecutive symbol that is in the SRS resource and that corresponds to the third time period comprises at least one symbol set, each of the at least one symbol set comprises one symbol or multiple symbols, and the at least one fourth symbol is a symbol set having a largest quantity of symbols in the at least one symbol set.

9. The method according to any one of claims 6 to 8, wherein the at least one fourth symbol comprises S types of symbols, each type of symbol of the S types of symbols corresponds to a different antenna port for sending the SRS, S is a positive integer, an end moment of each type of symbol of the at least one fourth symbol is later than an end moment of a same type of symbol in at least one eighth symbol, the same type of symbols correspond to a same antenna port for sending the SRS, and the at least one eighth symbol is all symbols in the at least one consecutive symbol that is in the SRS resource other than the at least one fourth symbol and that corresponds to the third time period.

10. A communication method, comprising:

receiving an SRS on at least one ninth symbol in an SRS resource, wherein the SRS resource comprises at least one tenth symbol, and the at least one tenth symbol is a symbol in the at least one ninth symbol; and

associating uplink scheduling with the SRS resource, wherein

an antenna port corresponding to the at least one tenth symbol comprises all antenna ports of a terminal device, or an antenna port corresponding to the at least one tenth symbol comprises all antenna ports related to the uplink scheduling.

11. The method according to claim 10, wherein the SRS is sent on the at least one tenth symbol over all the antenna ports of the terminal device a same quantity of times.

12. The method according to claim 10 or 11, wherein the at least one ninth symbol comprises at least one symbol set, each of the at least one symbol set comprises one symbol or multiple symbols, and the at least one tenth symbol is a symbol set having a largest quantity of symbols in the at least one symbol set.

13. The method according to any one of claims 10 to 12, wherein the at least one tenth symbol comprises S types of symbols, each type of symbol of the S types of symbols corresponds to a different antenna port for sending the SRS, S is a positive integer, an end moment of each type of symbol of the at least one tenth symbol is later than an end moment of a same type of symbol in at least one eleventh symbol, and the at least one eleventh symbol is all symbols in the at least one ninth symbol other than the at least one tenth symbol.

14. The method according to claim 10 or 11, wherein the at least one ninth symbol corresponds to N time periods on the SRS resource, each of the N time periods corresponds to one symbol or multiple consecutive symbols, the at least one tenth symbol is at least one symbol of one symbol or multiple consecutive symbols corresponding to a fifth time period in the N time periods, and N is a positive integer, wherein

the fifth time period is a time period having a largest quantity of symbols in the N time periods, and/or the fifth time period is a time period having a latest end moment in the N time periods.

15. The method according to claim 14, wherein a symbol corresponding to the fifth time period comprises at least one symbol set, each of the at least one symbol set comprises one symbol or multiple consecutive symbols, and the at least one tenth symbol is a symbol set having a largest quantity of symbols in the at least one symbol set.

16. The method according to claim 14 or 15, wherein a symbol corresponding to the fifth time period comprises at least one symbol set, each of the at least one symbol set comprises one symbol or multiple consecutive symbols, and the at least one tenth symbol is a symbol set having a latest end moment in the at least one symbol set.

17. A communication apparatus, comprising:

a receiving unit, configured to receive indication information, wherein the indication information indicates that SRS sending on a first symbol in an SRS resource is dropped; and a sending unit, configured to send the SRS on at least one second symbol, wherein the at least one second symbol is a symbol in at least one consecutive symbol that is in the SRS resource and that corresponds to a first time period, the first time period is a time period between a first moment and a second moment, the first moment is a moment at which the indication information is parsed by a terminal device, the second moment is a moment corresponding to a start location of the first symbol, and an antenna port that is for sending the SRS and that corresponds to the at least one second symbol comprises all antenna ports of the terminal device.

18. The apparatus according to claim 17, wherein the SRS is sent on the at least one second symbol over all the antenna ports of the terminal device a same quantity of times.

19. The apparatus according to claim 17 or 18, wherein the at least one consecutive symbol that is in the SRS resource and that corresponds to the first time period comprises at least one symbol set, each of the at least one symbol set comprises one symbol or multiple consecutive symbols, and the at least one second symbol is a symbol set having a largest quantity of symbols in the at least one symbol set.

20. The apparatus according to any one of claims 17 to 19, wherein the at least one consecutive symbol that is in the SRS resource and that corresponds to the first time period comprises at least one symbol set, each of the at least one symbol set comprises one symbol or multiple consecutive symbols, and the at least one second symbol is a symbol set having a latest end moment in the at least one symbol set.

21. The apparatus according to any one of claims 17 to 20, wherein the apparatus further comprises a processing unit, configured to:
drop sending the SRS on a third symbol, wherein the third symbol is all symbols that are in the SRS resource other than the first symbol and the at least one second symbol and that correspond to a second time period, and the second time period is a time period between the first moment and an end moment of the SRS resource.

22. A communication apparatus, comprising:

a receiving unit, configured to receive multiple pieces of indication information, wherein the multiple pieces of indication information indicate that SRS sending on multiple symbols in an SRS resource is dropped; and a sending unit, configured to send the SRS on at least one fourth symbol and at least one fifth symbol, wherein the at least one fourth symbol is a symbol in at least one consecutive symbol that is in the SRS resource and that corresponds to a third time period, the third time period is a time period between a third moment and a fourth moment, the third moment is a moment at which first indication information is parsed by a terminal device, the fourth moment is a moment corresponding to a start location of a sixth symbol, the first indication information is latest received indication information in the multiple pieces of indication information, the sixth symbol is a symbol on which SRS sending is dropped as indicated by the first indication information, the at least one fifth symbol is all symbols that are in the SRS resource other than at least one seventh symbol and that correspond to a fourth time period, the fourth time period is a time period between a start moment of the SRS resource and the third moment, and the at least one seventh symbol is a symbol on which SRS sending is dropped as indicated by at least one piece of second indication information, the at least one piece of second indication information is all indication information in the multiple pieces of indication information other than the first indication information, and antenna ports that are for sending the SRS and that correspond to the at least one fourth symbol and the at least one fifth symbol comprise all antenna ports of the terminal device.

23. The apparatus according to claim 22, wherein a quantity of times the SRS is sent on the at least one fourth symbol is the same as a quantity of times the SRS is sent on the at least one fifth symbol over all the antenna ports of the terminal device.

24. The apparatus according to claim 22 or 23, wherein the at least one consecutive symbol that is in the SRS resource and that corresponds to the third time period comprises at least one symbol set, each of the at least one symbol set comprises one symbol or multiple symbols, and the at least one fourth symbol is a symbol set having a largest quantity of symbols in the at least one symbol set.

25. The apparatus according to any one of claims 22 to 24, wherein the at least one fourth symbol comprises S types of symbols, each type of symbol of the S types of symbols corresponds to a different antenna port for sending the SRS, S is a positive integer, an end moment of each type of symbol of the at least one fourth symbol is later than an end moment of a same type of symbol in at least one eighth symbol, the same type of symbols correspond to a same antenna port for sending the SRS, and the at least one eighth symbol is all symbols in the at least one consecutive symbol that is in the SRS resource other than the at least one fourth symbol and that corresponds to the third time period.

26. A communication apparatus, comprising:

    a receiving unit, configured to receive an SRS on at least one ninth symbol in an SRS resource, wherein the SRS resource comprises at least one tenth symbol, and the at least one tenth symbol is a symbol in the at least one ninth symbol; and
    a processing unit, configured to associate uplink scheduling with the SRS resource, wherein
    an antenna port corresponding to the at least one tenth symbol comprises all antenna ports of a terminal device, or an antenna port corresponding to the at least one tenth symbol comprises all antenna ports related to the uplink scheduling.

27. The apparatus according to claim 26, wherein the SRS is sent on the at least one tenth symbol over all the antenna ports of the terminal device a same quantity of times.

28. The apparatus according to claim 26 or 27, wherein the at least one ninth symbol comprises at least one symbol set, each of the at least one symbol set comprises one symbol or multiple symbols, and the at least one tenth symbol is a symbol set having a largest quantity of symbols in the at least one symbol set.

29. The apparatus according to any one of claims 26 to 28, wherein the at least one tenth symbol comprises S types of symbols, each type of symbol of the S types of symbols corresponds to a different antenna port for sending the SRS, S is a positive integer, an end moment of each type of symbol of the at least one tenth symbol is later than an end moment of a same type of symbol in at least one eleventh symbol, and the at least one eleventh symbol is all symbols in the at least one ninth symbol other than the at least one tenth symbol.

30. The apparatus according to claim 26 or 27, wherein the at least one ninth symbol corresponds to N time periods on the SRS resource, each of the N time periods corresponds to one symbol or multiple consecutive symbols, the at least one tenth symbol is a symbol of a symbol corresponding to a fifth time period in the N time periods, and N is a positive integer, wherein
the fifth time period is a time period having a largest quantity of symbols in the N time periods, and/or the fifth time period is a time period having a latest end moment in the N time periods.

31. The apparatus according to claim 30, wherein the symbol corresponding to the fifth time period comprises at least one symbol set, each of the at least one symbol set comprises one symbol or multiple consecutive symbols, and the at least one tenth symbol is a symbol set having a largest quantity of symbols in the at least one symbol set.

32. The apparatus according to claim 30 or 31, wherein the symbol corresponding to the fifth time period comprises at least one symbol set, each of the at least one symbol set comprises one symbol or multiple consecutive symbols, and the at least one tenth symbol is a symbol set having a latest end moment in the at least one symbol set.

33. A communication apparatus, comprising a processor, wherein the processor is configured to execute a computer program or instructions, to cause the communication apparatus to perform the method according to any one of claims 1 to 5.

34. A communication apparatus, comprising a processor, wherein the processor is configured to execute a computer program or instructions, to cause the communication apparatus to perform the method according to any one of claims 6 to 9.

35. A communication apparatus, comprising a processor, wherein the processor is configured to execute a computer program or instructions, to cause the communication apparatus to perform the method according to any one of claims 10 to 16.

36. The communication apparatus according to any one of claims 33 to 35, wherein the communication apparatus further comprises a memory, and the memory is configured to store the computer program or the instructions.

37. The communication apparatus according to any one of claims 33 to 35, wherein the communication apparatus further comprises a communication interface, and the communication interface is configured to input and/or output a signal.

**38.** A computer-readable storage medium, wherein the computer-readable storage medium stores a computer program or instructions, and when the computer program or the instructions are run on a computer,

the method according to any one of claims 1 to 5 is performed; or
the method according to any one of claims 6 to 9 is performed; or
the method according to any one of claims 10 to 16 is performed.

**39.** A computer program product, comprising instructions, wherein when the instructions are run on a computer,

the method according to any one of claims 1 to 5 is performed; or
the method according to any one of claims 6 to 9 is performed; or
the method according to any one of claims 10 to 16 is performed.

FIG. 1

FIG. 2

0　　　0　　　0　　　1　　　1　　　1

OFDM symbol

FIG. 3

400

| Network device | | Terminal device |

S410: Indication information, indicating that SRS sending on a first symbol in an SRS resource is dropped →

S420: Send the SRS to the network device on at least one second symbol, where the at least one second symbol is a symbol in at least one consecutive symbol that is in the SRS resource and that corresponds to a first time period ←

FIG. 4

0 to 3  4 to 7  0 to 3  4 to 7  0 to 3  4 to 7  0 to 3  4 to 7

OFDM symbol

First moment    First time period    Second moment

FIG. 5

600

| Network device |   | Terminal device |

S610: Multiple pieces of indication information, indicating that SRS sending on a sixth symbol and at least one seventh symbol in an SRS resource is dropped

S620: Send the SRS on at least one fourth symbol and at least one fifth symbol

FIG. 6

0 to 3    4 to 7    0 to 3    4 to 7    0 to 3    4 to 7    0 to 3    4 to 7

OFDM symbol

Start moment of an SRS resource    Fourth time period    Third moment    Third time period    Fourth moment

FIG. 7

0 to 3    4 to 7    0 to 3    4 to 7    0 to 3    4 to 7    0 to 3    4 to 7

OFDM symbol

Start moment of an SRS resource    Fourth time period    Third moment    Third time period    Fourth moment

FIG. 8

0 to 3    4 to 7    0 to 3    4 to 7    0 to 3    4 to 7    0 to 3    4 to 7

OFDM symbol

Start moment of an SRS resource    Fourth time period    Third moment    Third time period    Fourth moment

FIG. 9

1000

```
┌──────────┐                                              ┌──────────┐
│ Network  │                                              │ Terminal │
│  device  │                                              │  device  │
└──────────┘                                              └──────────┘
```

S1010: Receive an SRS on at least one ninth
symbol in an SRS resource, where the at least one
ninth symbol includes at least one tenth symbol

```
┌──────────────┐
│Associate uplink│
│scheduling with the│
│ SRS resource │
└──────────────┘
```

FIG. 10

| 0 to 3 | 4 to 7 | 0 to 3 | 4 to 7 | 0 to 3 | 4 to 7 | 0 to 3 | 4 to 7 |

OFDM symbol

FIG. 11

| 0 to 3 | 4 to 7 | 0 to 3 | 4 to 7 | 0 to 3 | 4 to 7 | 0 to 3 | 4 to 7 |

OFDM symbol

Time period #1　　　　　　　Time period #2

FIG. 12

Communication apparatus 1300

Processor 1310

Memory 1340

Bus 1330

Communication interface 1320

FIG. 13

Communication apparatus 1400

Transceiver unit 1410

Processing unit 1420

Storage unit 1430

FIG. 14

Communication apparatus 1500

Processor 1510

Input/Output interface 1520

FIG. 15

## INTERNATIONAL SEARCH REPORT

| International application No. |
| --- |
| **PCT/CN2024/117513** |

**A.    CLASSIFICATION OF SUBJECT MATTER**

H04L 5/00(2006.01)i;  H04W 72/12(2023.01)i

According to International Patent Classification (IPC) or to both national classification and IPC

**B.    FIELDS SEARCHED**

Minimum documentation searched (classification system followed by classification symbols)

IPC: H04L,H04W,H04B

Documentation searched other than minimum documentation to the extent that such documents are included in the fields searched

Electronic data base consulted during the international search (name of data base and, where practicable, search terms used)

3GPP, CJFD, CNTXT, DWPI, ENTXT, ENTXTC, VEN, WPABS, WPABSC: 指示, SRS, 发送, 取消, 第二符号, 时段, 时刻, 天线端口, indicat+, sounding reference signal, cancel, symbol, port

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106992804 A (ZTE CORP.) 28 July 2017 (2017-07-28) description, paragraphs [0387]-[0390] | 1-39 |
| A | CN 109716839 A (GUANGDONG OPPO MOBILE COMMUNICATIONS CO., LTD.) 03 May 2019 (2019-05-03) entire document | 1-39 |
| A | CN 115720704 A (SAMSUNG ELECTRONICS CO., LTD.) 28 February 2023 (2023-02-28) entire document | 1-39 |
| A | WO 2022205334 A1 (APPLE INC.) 06 October 2022 (2022-10-06) entire document | 1-39 |
| A | WO 2023051313 A1 (HUAWEI TECHNOLOGIES CO., LTD.) 06 April 2023 (2023-04-06) entire document | 1-39 |

☐ Further documents are listed in the continuation of Box C.      ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **16 December 2024** | **23 December 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/117513**

| Patent document cited in search report | | | Publication date (day/month/year) | Patent family member(s) | | | Publication date (day/month/year) |
|---|---|---|---|---|---|---|---|
| CN | 106992804 | A | 28 July 2017 | WO | 2017125009 | A1 | 27 July 2017 |
| | | | | US | 2019132103 | A1 | 02 May 2019 |
| CN | 109716839 | A | 03 May 2019 | RU | 2721751 | C1 | 21 May 2020 |
| | | | | US | 2019207733 | A1 | 04 July 2019 |
| | | | | US | 2019223188 | A1 | 18 July 2019 |
| | | | | US | 2019380133 | A1 | 12 December 2019 |
| | | | | KR | 20190051993 | A | 15 May 2019 |
| | | | | TW | 201815119 | A | 16 April 2018 |
| | | | | CA | 3037409 | A1 | 29 March 2018 |
| | | | | AU | 2016424004 | A1 | 11 April 2019 |
| | | | | PH | 12019500580 | A1 | 28 October 2019 |
| | | | | JP | 2019535171 | A | 05 December 2019 |
| | | | | EP | 3500000 | A1 | 19 June 2019 |
| | | | | MX | 2019003336 | A | 03 June 2019 |
| | | | | IL | 265462 | A | 30 May 2019 |
| | | | | ZA | 201901771 | B | 27 November 2019 |
| | | | | WO | 2018053814 | A1 | 29 March 2018 |
| | | | | BR | 112019005504 | A2 | 11 June 2019 |
| | | | | EP | 3930244 | A1 | 29 December 2021 |
| | | | | CN | 112398634 | A | 23 February 2021 |
| CN | 115720704 | A | 28 February 2023 | EP | 4128641 | A1 | 08 February 2023 |
| | | | | US | 2021336820 | A1 | 28 October 2021 |
| | | | | WO | 2021210946 | A1 | 21 October 2021 |
| | | | | KR | 20210128314 | A | 26 October 2021 |
| | | | | KR | 20210128330 | A | 26 October 2021 |
| | | | | KR | 20210128332 | A | 26 October 2021 |
| WO | 2022205334 | A1 | 06 October 2022 | US | 2023337229 | A1 | 19 October 2023 |
| | | | | BR | 112023020013 | A2 | 14 November 2023 |
| | | | | JP | 2024512101 | A | 18 March 2024 |
| | | | | EP | 4316087 | A1 | 07 February 2024 |
| | | | | KR | 20230157508 | A | 16 November 2023 |
| | | | | CN | 115443717 | A | 06 December 2022 |
| WO | 2023051313 | A1 | 06 April 2023 | | None | | |

Form PCT/ISA/210 (patent family annex) (July 2022)

**EP 4 783 508 A1**

**Patent documents cited in the description**

- CN 202311286257